(19) Europäisches Patentamt / European Patent Office / Office européen des brevets

(11) EP 4 095 652 A1

(12) EUROPEAN PATENT APPLICATION

(43) Date of publication:
30.11.2022 Bulletin 2022/48

(21) Application number: 21175848.7

(22) Date of filing: 26.05.2021

(51) International Patent Classification (IPC):
G06F 3/01 (2006.01)          G01C 23/00 (2006.01)
G01C 19/00 (2013.01)         G01C 21/16 (2006.01)
G02B 27/01 (2006.01)

(52) Cooperative Patent Classification (CPC):
G06F 3/012; G02B 27/0179; H04S 7/304;
H04R 2499/13; H04S 2400/11

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Terma A/S
8520 Lystrup (DK)

(72) Inventors:
• OLESEN, Morten Fabricius
  9530 Støvring (DK)
• TANGE, Andreas Lippert
  8260 Viby J (DK)

(74) Representative: Zacco Denmark A/S
Arne Jacobsens Allé 15
2300 Copenhagen S (DK)

(54) **ORIENTATION TRACKING OF AN OBJECT CO-MOVING WITH PLATFORM**

(57)     Disclosed is an orientation tracking system for tracking an orientation of an object relative to a moving platform and a method of tracking an orientation of an object relative to a moving platform by means of said orientation tracking system, wherein the object is co-moving with and rotatable relative to the moving platform. Referred herein, the orientation tracking system comprises a first inertial sensor group fixed to the moving platform. The orientation tracking system further comprises a second inertial sensor group attachable to the object. A first output is received from the first inertial sensor group, the first output representing a first angular rate measurement and a first acceleration measurement. A second output is received from the second inertial sensor group, the second output representing a second angular rate measurement and a second acceleration measurement. Incoming measurements are processed by updating an orientation estimate of the object relative to the moving platform based on the first angular rate measurement and the second angular rate measurement. A frame misalignment between the object and the moving platform is determined based on the first acceleration measurement, the second acceleration measurement and the updated orientation estimate. An orientation error estimate for the orientation estimate is maintained by processing the updated orientation estimate and the frame misalignment. A corrected orientation estimate of the object relative to the moving platform is provided, e.g. via an output module or communicated to a device associated with the moving platform, by correcting the updated orientation estimate based on the orientation error estimate.

Fig. 1

EP 4 095 652 A1

**Description**

**Technical Field**

The invention relates to an orientation tracking system and a method of tracking an orientation of an object relative to a co-moving platform, particularly the invention relates to an orientation tracking system and a method of tracking an orientation of an object relative to a co-moving platform by means of an orientation tracking system comprising a first inertial sensor group fixed to the moving platform and a second inertial sensor group attached to the object.

**Background**

Head tracking by electronic means has found many uses in virtual/augmented reality, gaze detection, facial gesture recognition and motion capture where it may be useful to track the orientation of a user's head to provide an enhanced user experience. For example, a head tracking system may provide an immersive user experience where a user's perception of reality and computer-generated stimuli, e.g. images or sound, are seamlessly fused based on precise, low-latency tracking of the user's movements.

It is generally known to provide a head-worn apparatus for head tracking having an inertial measurement group comprising a plurality of sensors configured to detect changes in position and/or orientation along or about mutually perpendicular axes, e.g. using a suitable combination of accelerometers, gyroscopes and magnetometers.

However, measurements from accelerometers and gyroscopes are subject to slowly-varying noise which when integrated, unless compensated for, leads to an increasing error in an estimated position and/or orientation based on such measurements. This phenomenon is commonly referred to as drift. Consequently, the measurements from such a plurality of sensors in an inertial measurement group may typically need to be processed together to derive e.g. an orientation estimate by accumulating time-series of measurements of angular rates of change in said orientation and so forth.

In some solutions, measurements from an inertial measurement group provided in a head tracking system have additional compensation for the drift. Existing solutions typically rely on either acoustic or magnetic sensors configured for pose detection, based on measurements of a time-of-flight or local field direction, to provide inertial compensation, to thereby reset the inertial measurement group to a known correct value e.g. for the orientation estimate relative to the moving platform during or after completing a maneuver. Installation of such acoustic or magnetic sensors is not always feasible, e.g. in an aircraft cockpit, where sensor equipment for active orientation measurements may be too invasive.

In other solutions, the orientation tracking may be assisted by optical detection and tracking, such as by controlling visual indicators at the head-worn apparatus to aide in visual head tracking using computer vision techniques. However, it is not always feasible to provide an optical sensor, such as a digital camera, with an unobstructed view of the user's head to enable reliable visual head tracking, and furthermore, the use of computer vision for head tracking has a number of drawbacks related to being computationally resource-intensive, requiring calibration to correct for lens distortion and needing relatively consistent ambient lighting conditions to work properly.

Thus, there exists a need for an improved head tracking system to provide a reliable and accurate orientation estimate for a user's head to overcome one or more of the limitations of existing solutions.

**Summary**

Disclosed herein is, in a first aspect of the present disclosure, a method of tracking an orientation of an object relative to a moving platform by means of an orientation tracking system comprising a first inertial sensor group fixed to the moving platform and a second inertial sensor group attached to the object, wherein the object is co-moving with and rotatable relative to the moving platform, the method comprising the steps of:

-   receiving a first output from the first inertial sensor group representing a first angular rate measurement, $\omega_{m,A/I}$, and a first acceleration measurement, $a_{m,A/I}$, and receiving a second output from the second inertial sensor group representing a second angular rate measurement, $\omega_{m,P/I}$, and a second acceleration measurement, $a_{m,P/I}$;
-   updating an orientation estimate of the object relative to the moving platform based on the first angular rate measurement, $\omega_{m,A/I}$, and the second angular rate measurement, $\omega_{m,A/I}$;
-   determining a frame misalignment between the object and the moving platform based on the first acceleration measurement, $a_{m,A/I}$, the second acceleration measurement, $a_{m,P/I}$, and the updated orientation estimate;
-   maintaining an orientation error estimate for the orientation estimate by processing the updated orientation estimate and the frame misalignment; and
-   communicating a corrected orientation estimate, of the object relative to the moving platform, to a device, such as a control system, by correcting the updated orientation estimate based on the orientation error estimate.

It is an advantage of the method of tracking an orientation of an object relative to a moving platform, as herein described, that an orientation estimate obtainable by the steps of the method may more accurately reflect an actual orientation of the object relative to the moving platform by mitigating the effects of gyroscopic drift. It is a further advantage that an orientation estimate can be reliably obtained for an object relative to a moving platform by essentially relying on differences of measurements obtained using inertial sensors at the object and at the moving platform, respectively, and specifically acceleration measurements and angular rate measurements, because this provides a simple and compact solution that can be fully integrated into many different systems. The inventors have realized that it is promising to implement an improved orientation tracking system which provides these advantages, in particular, when an object and/or a user of that object is co-moving with the moving platform because differences in acceleration measurements may be used for realignment.

The inventors have realized that, because the moving platform and the object are co-moving, an improved orientation tracking system may be obtained using only inertial sensors by relying on those inertial sensors being subjected to a common acceleration affecting them when the moving platform is affected by gravity and/or maneuvering.

Tracking an orientation of an object relative to a moving platform by means of an orientation tracking system as herein disclosed may provide a variety of advantages by automatically processing incoming measurements from sensors located at the moving platform and the object, i.e. without requiring measurement of any spatial angles formed between the moving platform and the object by means of sensors other than inertial sensors. The orientation tracking system may comprise a computational device having a computational capacity configured to process each of a plurality of incoming measurements received from respective sensors by repeatedly updating an orientation estimate by iterating through said plurality of measurements. In this respect, tracking the orientation of the object relative to the moving platform may be understood as a substantially real-time filtering being applied to a time-series of noisy measurements to provide an orientation estimate with an improved accuracy and processing latency in response to each new incoming measurement.

The orientation tracking system comprises a first inertial sensor group fixed to the moving platform and a second inertial sensor group attachable to the object. Each of the first and second inertial sensor group may be an inertial measurement unit (IMU), which is configured to detect linear acceleration using one or more accelerometers and to detect angular rates of rotation using one or more gyroscopes. Accordingly, the first and second inertial sensor group may be enabled to measure linear acceleration along one or more axes, such as along two or three substantially perpendicular axes, relative to an inertial reference frame. The first and second inertial sensor group may moreover be enabled to measure angular rates of rotation about one or more axes, such as about two or three substantially perpendicular axes in an inertial reference frame.

It is an advantage of the method of tracking an orientation of an object relative to a moving platform, as herein described, that a corrected orientation estimate obtainable by the steps of the method may be provided continually or in rapidly successive steps with a high update rate, such as at 30 Hz or more, by repeatedly receiving new sets of measurements from both the first inertial sensor group and the second inertial sensor group and processing the first and second outputs together at each time increment. It may be advantageous that the method of tracking an orientation of an object relative to a moving platform provides a corrected orientation estimate which is both accurate and can be computed substantially in real-time, i.e. with low processing latency, such as less than 50ms, because this provides an improved quality of immersion for a user perceiving computer-generated stimuli generated based on orientation tracking.

Due to being fixed to the moving platform, the first inertial sensor group provides a first output representing a first angular rate measurement, $\omega_{m,A/I}$, and a first acceleration measurement, $a_{m,A/I}$, of the moving platform relative to an inertial reference frame. The affiliation of measurements to the moving platform is denoted by appending a subscript A/I to mathematical symbols, e.g. indicating that said measurements are of the movement of the first inertial sensor group, or as fixed to the moving platform, of the moving platform, such as the movement of a vehicle, such as the movement of an aircraft (A) relative to an inertial (I) reference frame.

The second inertial sensor group being attachable to an object allows for the second inertial sensor group to become substantially fixedly located relative to said object, thus, when attached to an object, the second inertial sensor group provides a second output further representing a second angular rate measurement, $\omega_{m,P/I}$, and a second acceleration measurement, $a_{m,P/I}$, of that object likewise relative to that inertial reference frame. The affiliation of measurements to the object is denoted by appending a subscript P/I to mathematical symbols, unless already having another subscript, e.g. indicating that said measurements are of the movement of the second inertial sensor group attachable, or as attached, to the object, the movements of a pilot (P), or the movements of an object associated with the pilot, relative to an inertial (I) reference frame.

The object is co-moving with the moving platform. This provides that the object will follow substantially the same trajectory as the moving platform as seen relative to an external reference frame, such as a reference frame fixed relative to the ground. The object and the moving platform are thus subjected to substantially identical specific forces, i.e. combinations of gravitational and linear acceleration, by the object being co-moving with the moving platform. Accordingly, a 3-axis accelerometer fixed to the moving platform object would measure substantially the same magnitude of its measured 3-axis acceleration vector as a 3-axis accelerometer attached to the object. The moving platform and the object may be seen as being subjected to a common acceleration seen relative to an inertial reference frame because they are co-moving. There may be small differences in acceleration due to movements of the object relative to the platform, but over time the average difference will be substantially zero, if the object and the platform are co-moving. The moving platform may be a vehicle for transportation, such as an aircraft or a car, and the object may be located within said vehicle, such as in a cabin of the vehicle.

The object is typically rotatable relative to the moving platform. The object may be an object which is associated with a user of the moving platform. The orientation tracking of the object relative to the moving platform may enhance that user's use of the object or the user experience associated with the spatial relation of the object and the moving platform, such as by increasing operability and/or security of interactive control systems of an aircraft e.g. by the pilot, crew and passengers each having their own object, and tracking the orientation of each of them relative to one another. It is understood that the object may be rotatable relative to the moving platform from one spatial orientation to another spatial orientation about any rotational axis. The object may be freely rotatable when in use, i.e. when co-moving with the moving platform.

In some embodiments, the orientation tracking system comprises a third inertial sensor group attached to another object. The another object may be co-moving with the moving platform and/or the object and rotatable relative to the moving platform. The third inertial sensor group may be substantially identical to the second inertial sensor group, e.g. comprising a third 3-axis angular rate sensor and a third 3-axis accelerometer, and may be attachable to or fixedly positioned at the another object. Alternatively or additionally, the orientation tracking system comprises a plurality of inertial sensor groups, such as in addition to a first inertial sensor group fixed to the moving platform, wherein each inertial sensor group is attached to one of a plurality of objects co-moving with and rotatable relative to the moving platform. In this case it may be possible to use the same first inertial sensor group for several or all users.

In some embodiments, the object is a device configured to be worn by a human. The object or user-worn device may not necessarily be fixed to or kept in physical contact with the moving platform. Rather, the object may be configured to be worn by a user and used when said user is co-moving with the moving platform. When not in use, it may be possible to displace or remove the object from the moving platform.

In some embodiments, or merely as an example which may be helpful to understand the present disclosure, the moving platform is a piloted aircraft and the object is an apparatus being worn by a pilot of said aircraft, such as a head-worn apparatus. As such, the object may be a helmet, a headset or a display to be worn by a pilot and may be configured to provide an improved pilot interaction, e.g. with control and navigation systems of the aircraft, through real-time tracking of the pilot's head.

In some embodiments, the orientation tracking system may be a head tracking system for tracking an orientation of the head of a user relative to a moving platform. In such an example, the object may be configured to be worn on the head of the user or move with the user, so that the object follows along with the head as the user moves.

In practice, a head tracking system preferably comprises a head-worn apparatus and a reference device mounted in the platform providing a reference frame relative to which the position and/or orientation of the head-worn apparatus is being tracked. In addition to either one or both of the head-worn apparatus and the reference device comprising sensors for measuring changes in position and/or orientation in 3D space, a data exchange must typically be facilitated between the head-worn apparatus and the reference device to deduce the position and/or orientation of one relative to the other. Hereby, measurements obtained relative to the user's head position and/or orientation may be directly or indirectly communicated to the reference device, or *vice versa,* to permit a comparison with other measurements or data to determine the relative spatial relationship of the head-worn apparatus and the reference device.

The method comprises a step of receiving a first output from the first inertial sensor group and receiving a second output from the second inertial sensor group. The first output and the second output may be received substantially simultaneously or within a short time span of each other, such as within 50 ms, such as within 10 ms or less.

The first output received from the first inertial sensor group represents a first inertial measurement comprising a first angular rate measurement, $\omega_{m,A/I}$, and a first acceleration measurement, $\boldsymbol{a}_{m,A/I}$, of the moving platform relative to an inertial reference frame.

The first acceleration measurement, $\boldsymbol{a}_{m,A/I}$, may be a 3-component vector representation of acceleration determined based on the first output of the first inertial sensor group. For example, the first inertial sensor group may comprise an acceleration sensor in the form of a 3-axis accelerometer fixed to the moving platform.

The first angular rate measurement, $\omega_{m,A/I}$, may be a 3-component vector representation of angular velocity, i.e. angular rates of rotation about three mutually perpendicular axes, likewise determined based on the first output of the first inertial sensor group. For example, the first inertial sensor group may comprise an angular velocity sensor in the form of a 3-axis gyroscope fixed to the moving platform.

Further, the second output received from the second inertial sensor group represents a second inertial measurement comprising a second angular rate measurement, $\omega_{m,P/I}$, and a second acceleration measurement, $\boldsymbol{a}_{m,P/I}$, of the object relative to an inertial reference frame. For inertial measurements of the object, the second angular rate measure-

ment, $\omega_{m,P/I}$, and the second acceleration measurement, $\boldsymbol{a}_{m,P/I}$, may also be 3-component vector representations of angular velocity and acceleration, respectively, determined based on the second output of the second inertial sensor group. For example, the second inertial sensor group may comprise an acceleration sensor in the form of a 3-axis accelerometer and an angular velocity sensor in the form of a 3-axis gyroscope attachable to become removably fixed to the object.

Tracking an orientation of an object relative to a moving platform, wherein the object is co-moving and rotatable relative to the moving platform, may include occasionally and/or iteratively recomputing an orientation estimate $\Phi_e$ of the object relative to the moving platform. The orientation estimate $\Phi_e$ may include angles of rotation of said object about at least one, such as two or three, rotation axes which are fixed relative to the moving platform. The orientation estimate $\Phi_e$ may uniquely define one, two or three elemental rotations, e.g. by said angles of rotation, corresponding to the current orientation of the object as seen by an observer travelling with the moving platform. An orientation estimate may provide information representing an instantaneous user perspective as perceived by said observer, such as via a forward, upright gaze.

The orientation estimate $\Phi_e$ of the object relative to the moving platform may be a 3-component vector representation of angular position, i.e. rotation angles about three mutually perpendicular axes, of the object relative to the moving platform. Updating the orientation estimate $\Phi_e$ of the object relative to the moving platform based on the angular rate measurements, $\omega_{m,A/I}$ and $\omega_{m,P/I}$, may be performed according to:

$$\boldsymbol{\Phi}_{n+1} \leftarrow \boldsymbol{f}(\boldsymbol{\omega}_{m,A/I}, \boldsymbol{\omega}_{m,P/I}, \boldsymbol{\Phi}_n, \Delta t_n)$$

, where $\Phi_n$ is a current orientation estimate for time step n and $\Phi_{n+1}$ is an updated orientation estimate based on the angular rate measurements, $\omega_{m,A/I}$ and $\omega_{m,P/I}$, obtained during said time step duration $\Delta t_n$, e.g. from time $t_n$ to time $t_{n+1}$ etc.

For example, the updated orientation estimate $\Phi_{n+1}$ may be calculated by numerical integration of a differential angular rate $\omega_{A/P} = \omega_{m,A/I} - \boldsymbol{M}_{AP}\,\omega_{m,P/I}$ where $\boldsymbol{M}_{AP}$ is a transformation matrix from a reference frame of the object to a reference frame of the moving platform. The transformation matrix $\boldsymbol{M}_{AP}$ may be determined based on the current orientation estimate $\Phi n$, which is known from a previous time step $n - 1$ and so forth. Hence, when the rate of change of the orientation of the object relative to the moving platform is determined by the differential angular rate $\omega_{A/P}$, updating the orientation estimate may be performed based on differential angular rates and $\Delta t$, such as using a strap-down integration algorithm, $\Phi_{n+1} = \boldsymbol{f}(\Phi_n, \omega_{A/P}, \Delta t_n)$, where $\Delta t_n$ is a time step duration for which the differential angular rate $\omega_{A/P}$ is determined.

It is understood that a reference frame of the moving platform may for example be defined according to three mutually perpendicular axes that are fixed relative to each other and moving, i.e. translating and rotating, jointly with the moving platform and coinciding with three principal directions of said moving platform, e.g. forward, right and a third direction perpendicular to both the forward and right direction according to the right-hand rule. The object may define another reference frame according to three other mutually perpendicular axes that are likewise fixed relative to each other but are instead moving, i.e. translating and rotating, jointly with the object.

For example, an orientation estimate $\Phi_e$ of the object relative to the moving platform may comprise three angles of rotation representing three elemental rotations, e.g. by said angles of rotation, about said three principal directions corresponding to a spatial rotation, which the object is estimated to have undergone with respect to the moving platform, e.g. from an initial known orientation when the object was aligned with the moving platform to the current orientation of the object. The three angles of rotation of the orientation estimate $\Phi_e$ may, for example, include roll ($\phi$), pitch ($\theta$) and yaw ($\psi$) angles which describe three elemental rotations as $\boldsymbol{M}_X(\phi)$, $\boldsymbol{M}_Y(\theta)$ and $\boldsymbol{M}_Z(\psi)$, respectively, rotating the object about three principal axes X, Y and Z of the moving platform. Hereby, a transformation matrix, $\boldsymbol{M}_{AP}$, from a reference frame of the object to a reference frame of the moving platform may be or include such a rotation, based on the orientation estimate $\Phi_e$ including said three angles of rotation $\phi$, $\theta$ and $\psi$:

$$\boldsymbol{M}_{AP} = \boldsymbol{M}_Z(\psi)\,\boldsymbol{M}_Y(\theta)\,\boldsymbol{M}_X(\phi)$$

$$= \begin{bmatrix} \cos\theta\cos\psi & -\cos\phi\sin\psi + \sin\phi\sin\theta\cos\psi & \sin\phi\sin\psi + \cos\phi\sin\theta\cos\psi \\ \cos\theta\sin\psi & \cos\phi\cos\psi + \sin\phi\sin\theta\sin\psi & -\sin\phi\cos\psi + \cos\phi\sin\theta\sin\psi \\ -\sin\theta & \sin\phi\cos\theta & \cos\phi\cos\theta \end{bmatrix}$$

Because angular rate measurements, particularly those obtainable from gyro-sensors, may be subject to a slowly-varying noise component, often referred to as a "bias instability", orientation estimates obtained based on accumulation of angular rate measurements may be subject to increasing errors, also known as gyroscopic drift, as time progresses. The bias instability of a gyro-sensor or an angular rate sensor in an inertial measurement units may generally be present as systematic errors, i.e. a bias or a slowly-varying offset, in the angular rate measurements, and the magnitude of these systematic errors may depend on the type of angular rate sensor or gyro-sensor. For example, the magnitude may relate to nearly-DC voltage offsets present in an output signal of the gyro-sensor due to electrical noise and thermal drift affecting various electrical components.

Typically, consumer-grade gyro-sensors deliver the lowest performance in terms of bias stability, often being in the range between 10°/hour to 1°/second or worse, but may provide other advantages, such as being compact, lightweight and inexpensive to use. For applications related to orientation tracking for augmenting human perception, the gyroscopic drift due to bias instability may become problematic when the estimated orientation is misaligned by more than about 5-10° with the real orientation, so that e.g. computer-generated stimuli are perceivably out of alignment with reality or an output based on an estimated orientation may be delivered out of alignment with the actual orientation and/or position of an object. One possible option for extending the operable time of an orientation tracking systems is to use higher performance gyro-sensors, such as e.g. tactical- or military-grade gyro-sensors offering a bias stability of about 0. 1°/hour which are more expensive and typically larger in size and/or mass, or even more expensive navigation-grade gyro-sensors with bias stability below 0.01°/hour. However, without actively compensating for the bias instability, this gyroscopic drift may still render an orientation tracking system inoperable due to growing misalignment over time. An orientation tracking system according to the present disclosure may provide the advantage that smaller or less heavy inertial sensors are needed, due to compensating for drift and thus being stable for operational use with gyro-sensors having larger bias instability.

In some embodiments, one or both of the first inertial sensor group and/or the second inertial sensor group weighs less than 100 grams, such as less than 10 grams, such as between 1 and 5 grams, or even less than a few fractions of a gram.

The inventors have realized that, because the moving platform and the object are co-moving and thus subjected to a common acceleration, it may be possible to provide an orientation error estimate for the orientation estimate based on how the first and second inertial sensor groups measure a substantially identical, common acceleration affecting them when the moving platform is affected by gravity and/or maneuvering.

For example, when the moving platform and the object are both at rest relative to the ground and essentially only affected by a gravitational acceleration, $g$, due to Earth's gravity, it may be possible to determine whether an orientation estimate of the object relative to a reference frame defined by the platform has become misaligned with the actual orientation of the object, e.g. due to gyroscopic drift, based on discrepancies in the acceleration measurements from the first and the second inertial sensor groups. It may then be possible to correct the orientation estimate to restore vertical alignment, i.e. so that the orientation estimate and the actual orientation of the object are at most misaligned by a rotation within a horizontal plane, i.e. about a vertical axis as defined by the direction of gravitational acceleration, $g$.

It is an advantage of the method of orientation tracking that gyroscopic drift can be compensated for, to provide an improved accuracy, by determining a misalignment between the object and the moving platform based, at least in part, on discrepancies in the acceleration measurements from the first and the second inertial sensor groups by relying on, in particular, that the object is co-moving with the moving platform.

In some embodiments, the frame misalignment between the object and the moving platform represents a residual acceleration in the second acceleration measurement, $a_{m,P/I}$, of the second output when accounting for a common acceleration affecting the object and/or the moving platform. An expected value of a common acceleration affecting the object may be determined based on the first acceleration measurement, $a_{m,A/I}$, of the first output and the updated orientation estimate, optionally by using the updated orientation estimate to rotate said first acceleration measurement, $a_{m,A/I}$, by an angle or angles of rotation based on the updated orientation estimate. The frame misalignment may be determined, at least in part, based on the first and second acceleration measurements, $a_{m,A/I}$ and $a_{m,P/I}$, of the first and second outputs from the first and second inertial sensor groups, respectively, in accordance with a relative orientation therein between, such as by transforming one of said outputs using the orientation estimate or the corrected orientation estimate.

The orientation error estimate may be regularly or occasionally maintained based on new incoming acceleration measurements, $a_{m,A/I}$ and $a_{m,P/I}$, at the first and second inertial sensor groups. For example, the orientation error estimate may be maintained sparingly, such as only when detecting a substantially identical magnitude and/or direction of acceleration affecting both the moving platform and the object, e.g. due to gravity and/or platform maneuvering. The orientation error estimate for the orientation estimate may be iteratively updated, e.g. by processing at least the updated orientation estimate and the frame misalignment, to maintain said orientation error estimate along with the orientation estimate.

The method provides, as an output for an improved orientation tracking of the object relative to the moving platform, a corrected orientation estimate which is determined by correcting the updated orientation estimate based on the orientation error estimate. Thus, the method enables that a corrected orientation estimate may be communicated to a device, either in response to a request from said device or dependent on processing of each of the new incoming measurements. Hereby, an improved head tracking system may for example be implemented, which provides a reliable and accurate orientation estimate for a user's head when that user is co-moving with a moving platform, in particular during high-g manoeuvres.

In some embodiments, the device is a control system of or relating to the moving platform and/or the object. The method may be a computer-implemented method of providing an orientation estimate to a device. The device may be a device associated with the moving platform, such as a control system.

In some embodiments, updating an orientation estimate of the object relative to the moving platform includes calculating an angular displacement rate, $\omega_{A/P}$, between the object and the moving platform. The angular displacement rate, $\omega_{A/P}$, may be calculated based on the first angular rate measurement and the second angular rate measurement, and may be calculated by $\omega_{A/P} = \omega_{m,A/I} - M_{AP}\,\omega_{m,P/I}$ where $M_{AP}$ is a transformation matrix. The transformation matrix, $M_{AP}$, may e.g. be determined based on the orientation estimate. Hence, the angular displacement rate, $\omega_{A/P}$, can be determined based on the first angular rate measurement, $\omega_{m,A/I}$, and the second angular rate measurement, $\omega_{m,P/I}$, and optionally, the orientation estimate.

In some embodiments, the orientation estimate is determined as a quaternion $q_{PA}$ based on the angular displacement rate, $\omega_{A/P}$, according to a quaternion update equation, such as by numerical integration of:

$$\dot{q}_{PA}(t) = \tfrac{1}{2}\,q_{PA}(t) \otimes \begin{bmatrix} 0 \\ \omega_{A/P}(t) \end{bmatrix}.$$

In some embodiments, the frame misalignment is determined based on an acceleration discrepancy, $\Delta a_{PA}$, between the first acceleration measurement, $a_{m,A/I}$, and the second acceleration measurement, $a_{m,P/I}$, wherein one of the first output and the second output is being transformed from a reference frame of that output to a reference frame of another of the first output and the second output. The reference frame transformation may for example be by a rotation using the orientation estimate of the object relative to the moving platform, such as $\Delta a_{PA} = a_{m,P/I} - M_{PA}\,a_{m,A/I}$ where $M_{PA}$ is a transformation matrix. In this example, $M_{PA}$ represents a rotation of the first acceleration measurement, $a_{m,A/I}$, from a reference frame fixed relative to the moving platform, such as an aircraft (A), to another reference frame fixed relative to the object, such as a pilot (P), whereby the output of the first inertial sensor group is transformed from the reference frame of the moving platform to a reference frame of the output of the second inertial sensor group, i.e. the object reference frame. This provides that the transformed first acceleration measurement may be comparable to the second acceleration measurement in the absence of frame misalignment, i.e. if the orientation estimate is substantially identical to the actual orientation of the object.

A frame misalignment may thus be determined based on an acceleration discrepancy, $\Delta a_{PA}$, indicating a misalignment between the acceleration measurements, $a_{m,A/I}$ and $a_{m,P/I}$, of the first and second outputs of the inertial sensor groups.

The frame misalignment may represent an acceleration discrepancy, $\Delta a_{PA}$, between the acceleration measurements, $a_{m,A/I}$ and $a_{m,P/I}$, the acceleration discrepancy being calculated as a difference between an acceleration measurement received from one of the first and second inertial sensor groups and an acceleration value based on another acceleration measurement simultaneously received from another of the first and second inertial sensor groups. The acceleration value may, for example, represent a value of the another acceleration measurement when rotated, based on an orientation estimate, from a reference frame of said one of the first and second inertial sensor groups to a reference frame of said another of the first and second inertial sensor groups.

The acceleration discrepancy, $\Delta a_{PA}$, between the acceleration measurements, $a_{m,A/I}$ and $a_{m,P/I}$, may be a 3-component vector representation of acceleration error, i.e. a magnitude and/or a direction relative to three mutually perpendicular axes, between the acceleration measurements, $a_{m,A/I}$ and $a_{m,P/I}$, received from the first and second inertial sensor groups when taking into account their different frames of reference by using the orientation estimate of the object relative to the moving platform.

For example, the acceleration discrepancy, $\Delta a_{PA}$, indicative of a frame misalignment may be calculated as $\Delta a_{PA} = a_{m,P/I} - M_{PA}\,a_{m,A/I}$ where $M_{PA}$ is the transformation matrix, as explained above, from a reference frame of the object to a reference frame of the moving platform as determined based on the current orientation estimate $\Phi_n$. Hence, when the current orientation estimate $\Phi_n$ is an accurate representation of the orientation of the object relative to the moving platform, the calculated acceleration discrepancy, $\Delta a_{PA}$, is numerically much smaller than the acceleration measurements, $a_{m,A/I}$ and $a_{m,P/I}$, because contributions from their common acceleration cancel out. If, however, there is a misalignment between the current orientation estimate $\Phi_n$ and the actual orientation of the object relative to the moving platform, the acceleration discrepancy, $\Delta a_{PA}$, tends to be numerically larger due to frame misalignment.

In some embodiments, the method further comprises the steps of:

- updating an angular drift rate estimate for the first angular rate measurement, $\omega_{m,A/I}$, and/or the second angular measurement, $\omega_{m,P/I}$, based on at least the frame misalignment;

and wherein the updated orientation estimate and the frame misalignment are processed together with the updated angular drift rate estimate.

Hereby, the updated orientation estimation may be further compensated for angular drift rates estimated for gyroscopic drift due to bias instabilities affecting the gyro-sensors in the first and second inertial sensor groups by taking angular drift estimates of said bias instabilities of the first and second inertial sensor groups into account. It is contemplated that, due to the bias instability being predominantly slowly-varying, the angular drift rate estimates may be determined using observed time instances of frame misalignment, based on the first and second acceleration measurements, such that more accurate values of the orientation error estimate can be determined, and a corrected orientation estimate of the object relative to the moving platform can be provided as an outcome of performing the steps of the method.

In some embodiments, the angular drift rate estimate comprises a first angular rate bias, $\boldsymbol{b}_A$, estimated for the first angular rate measurement (5a), $\omega_{m,A/I}$, of the first output and/or a second angular rate bias, $\boldsymbol{b}_P$, estimated for the second angular rate measurement, $\omega_{m,P/I}$, of the second output based on at least the frame misalignment.

In some embodiments, the angular drift rate estimate is updated by estimating a bias error for the first angular rate bias, $\boldsymbol{b}_A$, and/or the second angular rate bias, $\boldsymbol{b}_P$, which minimizes the frame misalignment.

In some embodiments, the method further comprises the step of:

- correcting the first angular rate measurement, $\omega_{m,A/I}$, of the first output based on the first angular rate bias, $\boldsymbol{b}_A$, and/or the second angular rate measurement, $\omega_{m,P/I}$, of the second output based on the second angular rate bias, $\boldsymbol{b}_P$; preferably said correcting step being prior to or part of updating the orientation estimate.

In some embodiments, the first angular rate measurement and the second angular rate measurement are corrected based on the first angular rate bias, $\boldsymbol{b}_A$, the second angular rate bias, $\boldsymbol{b}_P$, and the estimated bias error for said biases. The first angular rate measurement, $\omega_{m,A/I}$, of the first output may be corrected based on the first angular rate bias, $\boldsymbol{b}_A$, and the estimated bias error for the first angular rate bias. The second angular rate measurement, $\omega_{m,P/I}$, of the second output may be corrected based on the second angular rate bias, $\boldsymbol{b}_P$, and the estimated bias error for the second angular rate bias. This provides that a value or values determined based on the first and second angular rate measurements may be calculated more accurately due to compensating, at least partially, for an error in the estimated angular rate biases thereby improving the corrected first and second angular rate measurements.

In some embodiments, the angular drift rate estimate for the first angular rate measurement, $\omega_{m,A/I}$, and the second angular rate measurement, $\omega_{m,P/I}$, is updated by repeatedly calculating an angular rate bias for one or both of the angular rate measurements as a function of the orientation estimate, the angular displacement rate, the frame misalignment and the previous value of said angular rate bias.

In some embodiments, processing the updated orientation estimate, the frame misalignment and the updated angular drift rate estimate further includes estimating an orientation uncertainty for the orientation estimate and/or the corrected orientation estimate based at least in part on a measurement uncertainty determined for each sensor. Estimating an orientation uncertainty for the corrected orientation estimate, and optionally outputting said orientation uncertainty along therewith e.g. using the output module, may provide one or more additional advantages for the users of the orientation tracking system. For example, it may be helpful to know how uncertain the estimated orientation of the user's head is when relying on exact knowledge of said orientation to accurately display spatially located information to that user.

In some embodiments, processing the updated orientation estimate, the frame misalignment and the angular drift rate estimate is based on an error-state filter algorithm, such as an Error State Kalman Filter or an Extended Error State Kalman Filter, preferably for an error-state model comprising:

- a nominal state, x, comprising the orientation estimate and the angular drift rate estimate, for which observations of the nominal state is a function of at least the frame misalignment; and
- an error state, $\Delta\boldsymbol{x}$, comprising the orientation error estimate and a bias error estimate for the angular drift rate estimate,

wherein the error-state model is propagated according to $\Delta\boldsymbol{x} \leftarrow \boldsymbol{f}(\boldsymbol{x}, \Delta\boldsymbol{x}, ...)$. For example, the error-state model may be propagated by iteration from a current time step $n$ to a next time step $n + 1$ according to $\Delta\boldsymbol{x}_{n+1} \leftarrow \boldsymbol{f}(\boldsymbol{x}_n, \Delta\boldsymbol{x}_n, ...)$ or similar.

By using an error-state filter algorithm, steps of processing of the updated orientation estimate may be performed more accurately and less often or using larger time steps between each iteration, because the error state dynamics are typically closer to being approximately linear, e.g. in terms of a mean state, than a full dynamic state model.

In some embodiments, the orientation estimate is a 3-axis orientation estimate and/or the corrected orientation estimate is a 3-axis corrected orientation estimate.

In some embodiments, the orientation error estimate is maintained for the orientation estimate by receiving a plurality of measurements including outputs from the first inertial sensor group and from the second inertial sensor group, and wherein processing the updated orientation estimate and the frame misalignment is performed for each of the plurality of measurements. In some embodiments, the processing is performed for the updated orientation estimate, the frame alignment and the angular drift rate estimate for each of the plurality of measurements.

In some embodiments, the method further comprises the steps of:

- detecting an occurrence of non-linear motion of the moving platform relative to an external inertial reference frame and/or an occurrence of relative motion of the object relative to the moving platform based on the first acceleration measurement, $a_{m,A/I}$, of the first output and/or the second acceleration measurement, $a_{m,P/I}$, of the second output; and
- correcting the updated orientation estimate based on the orientation error estimate in accordance with detecting an occurrence of said motion.

By only correcting the updated orientation estimate based on the orientation error estimate when an occurrence of a particular motion type of the moving platform is detected, the orientation estimate may be updated using fewer computations during the absence of said detection e.g.by having the updated orientation estimate replace the corrected orientation estimate when the orientation error estimate is unavailable.

In some embodiments, the updated orientation estimate is corrected based on the orientation error estimate when an occurrence of said motion is detected. When an occurrence of said motion is not being detected, the updated orientation estimate may replace the corrected orientation estimate, or the updated orientation estimate may be corrected based on the orientation error estimate to a lesser extent, such as by the orientation error estimate being reduced by a pre-determined factor less than one.

In some embodiments, the orientation estimate of the object relative to the moving platform is updated by repeatedly calculating an angular displacement rate, $\omega_{A/P}$, between the object and the moving platform as a function of the first angular rate measurement, $\omega_{m,A/I}$, the second angular rate measurement, $\omega_{m,A/I}$ and the previous value of said orientation estimate. This may provide that the method is easily computer-implementable, such as on a microcontroller having a limited computational capacity, memory footprint, bus bandwidth or the like.

Disclosed herein is, in a second aspect of the present disclosure, an orientation tracking system for tracking an orientation of an object relative to a moving platform, wherein the object is co-moving with and rotatable relative to the moving platform, the orientation tracking system comprising:

- a first inertial sensor group configured to be fixed to the moving platform;
- a second inertial sensor group attachable to the object;
- a processing module configured to receive a first output from the first inertial sensor group representing a first angular rate measurement, $\omega_{m,A/I}$ , and a first acceleration measurement, $a_{m,A/I}$, and to receive a second output from the second inertial sensor group representing a second angular rate measurement, $\omega_{m,P/I}$, and a second acceleration measurement, $a_{m,P/I}$, and to process incoming measurements to update an orientation estimate of the object relative to the moving platform based on the first angular rate measurement, $\omega_{m,A/I}$, and the second angular rate measurement, $\omega_{m,P/I}$;
- an alignment module configured to determine a frame misalignment between the object and the moving platform based on the first acceleration measurement, $a_{m,A/I}$, the second acceleration measurement, $a_{m,P/I}$, and the updated orientation estimate and to maintain an orientation error estimate for the orientation estimate by processing, using the processing module, the updated orientation estimate and the frame misalignment; and
- an output module configured to output a corrected orientation estimate of the object relative to the moving platform by correcting the updated orientation estimate based on the orientation error estimate.

Through the present disclosure, a space saving and cost efficient orientation tracking system may be achieved, where an improved/more precise orientation estimate of the object orientation relative to the moving platform may be achieved, as misalignments caused by accumulation of gyroscopic drift errors due to bias instability affecting the angular rate sensors are mitigated, compensated for or even substantially removed using acceleration measurements. Moreover, the orientation tracking system may provide a weight saving at least with respect to the components of the first and/or second inertial sensor group, due to only requiring gyro-sensors and accelerometers, whereby the orientation tracking system may be more comfortable, e.g. for a fighter pilot to use during high-g maneuvers, when integrated into a pilot-worn apparatus.

It is an advantage of the orientation tracking system, as herein described, that errors accumulated in the estimated orientation of an object relative to a moving platform, e.g. due to gyroscopic drift, can automatically and/or periodically be compensated for based on the output of accelerometers in the first and second inertial sensor groups. The orientation tracking system thus does not require any further misalignment mitigation arrangements, such as magnetometers or optical sensors, to provide accurate tracking of an object co-moving with and freely rotatable relative to a moving platform. It is contemplated that an orientation tracking system according to the present disclosure may be simpler, more compact, less expensive, and easier to use for end users, such as pilots, aircraft operators and technicians because only two inertial sensor groups consisting of gyro-sensors and accelerometers need to be installed within the cockpit.

Relying on magnetometers to directly measure the spatial orientation of an object in three dimensions can be unreliable in the presence of magnets (as found in e.g. loudspeakers and microphones), ferrometals or electromagnetic (EM) fields, such as artificially generated EM fields for wireless communication. It may be an advantage of the orientation tracking system and the method of orientation tracking that a corrected orientation estimate can be provided with sufficiently good accuracy and persistency that no further sensors, such as magnetometers, are needed to compensate for gyroscopic draft via bias instabilities affecting the gyro-sensors.

Moreover, the orientation tracking system may help to prevent pilot fatigue, e.g. due to sensory overload or non-intuitive workflows using complicated aircraft avionics, by enabling the use of head-up displays which follow the pilot's gaze through real-time head tracking with a high degree of accuracy. Compared to other head tracking systems, compensation for gyroscopic drift can be performed seamlessly as needed, without requiring manual intervention of the user, and without any EM emissions. It is advantageous that the orientation tracking system can perform reliably to mitigate the effects of gyroscopic drift and accurately track the orientation of an object within the moving platform for an extended duration of time, such as more than an hour of continuous or semi-continuous use. Reliable head tracking may provide an additional security for pilots due to avionics and controls being unambiguously localized using a virtual representation in relation to the pilot or the aircraft, so that the pilot can be enabled to interact therewith with greater precision or using coarser movements.

In some embodiments, the first inertial sensor group comprises a first 3-axis angular rate sensor and a first 3-axis accelerometer; and the second inertial sensor group comprises a second 3-axis angular rate sensor and a second 3-axis accelerometer.

The present inventor has realized that a frame misalignment between the object and the moving platform can be derived based on a 3-axis angle representation between 3-axis acceleration measurements from the first and second 3-axis accelerometers on a moving platform as a means for determining an orientation error estimate due to an initial misalignment and/or gyroscopic drift which occurs by accumulation of noisy angular rate measurement which causes drift of one reference frame relative to the other. Particularly, the inventors realized that in the absence of any angular drift errors in an orientation estimate of the object relative to the moving platform based on the angular rate measurements, a first acceleration measurement obtained at the first inertial sensor group approximately equals a second acceleration measurements obtained at the second inertial sensor group when the latter is transformed from a reference frame relative to the object into the reference frame of the moving platform or vice versa, e.g. by spatial rotation from one reference frame to the other reference frame according to the orientation estimate therein between. When the two reference frames are misaligned due to an alignment error being introduced in the orientation estimate, such that the orientation estimate is not an accurate representation of the physical orientation of the object relative to the moving platform, there is no such correspondence between acceleration measurements from the first inertial sensor group and the second inertial sensor group.

Thus, a frame misalignment being indicative of angular drift errors in the orientation estimate may be determined based on the degree of correspondence, or lack thereof, between acceleration measurements from different sensor groups.

In some embodiments, this gyroscopic drift is mainly due to the integration of two components, namely a slowly varying bias instability and a higher frequency noise in the output of angular rate sensors. In contrast to the angular rate sensors, the bias instability of accelerometer outputs is not critical since that output is not integrated when tracking orientation. With 3-axis accelerometer placements as in the present disclosure, both the 3-axis accelerometers are exposed to substantially the same acceleration caused by the movement of the moving platform, but the perceived acceleration may be rotated by rotating the object relative to the moving platform.

In some embodiments, using a 3-axis accelerometer placement, where the 3-axis accelerometers are attached/fixed to the object and the moving platform respectively, the XYZ components, and thus the angle of the vector representation of the respective accelerometer output, will deviate dependent on the orientation of the object relative to the moving platform.

Thus, by processing the output from the accelerometers, a "3-axis acceleration based orientation estimate" of the object relative to the moving platform may be determined as e.g. an angular difference between the different acceleration vector representations determined based on the output of the 3-axis accelerometer fixed to the moving platform and the acceleration vector representation determined based on the output of the 3-axis accelerometer fixed to the object.

In some embodiments, this information can be considered as an orientation estimate which is not exposed to drift errors, it may be processed to be compared to the 3-axis orientation estimate retrieved by means of the output of the angular rate sensors, so as to estimate/calculate a 3-axis orientation error estimate. This orientation error estimate may represent an estimate of the misalignment which, at least partly, is caused by drift errors in the angular rate sensors, and the orientation error estimate may thus be utilized in order to determine a proper orientation correction action. E.g. by adding a correction to the 3-axis orientation estimate retrieved by means of the output from the first and second angular rate sensors to obtain a corrected 3-axis orientation estimate output from the orientation tracking system, which may be more accurate with respect to gyroscopic drift errors or even in general.

The second sensor group is preferably attached to the object so that when the orientation of the object relative to the moving platform is changed, the second sensor group is subjected to about the same change in orientation as the object.

In embodiments of the invention, a correction to the 3-axis orientation estimate based on the 3-axis orientation error estimate provides a corrected 3-axis object orientation estimate output from the orientation tracking system, which may be used as input for other systems where the information of the orientation of the object relative to the moving platform may be beneficial, such as for a control system of or relating to the moving platform and/or the object, such as for user interaction.

In some embodiments, the first angular rate measurement, $\omega_{m,A/l}$, of the first output is obtained from the first 3-axis angular rate sensor.

In some embodiments, the first acceleration measurement, $a_{m,A/l}$, of the first output is obtained from the first 3-axis accelerometer.

In some embodiments, the second angular rate measurement, $\omega_{m,P/l}$, of the second output is obtained from the second 3-axis angular rate sensor.

In some embodiments, the second acceleration measurement, $a_{m,P/l}$, of the second output is obtained from the second 3-axis accelerometer.

In some embodiments, the frame misalignment is determined based on outputs of the first and second 3-axis accelerometers and the updated orientation estimate, which is based on outputs of the first and second 3-axis angular rate sensor.

In some embodiments, maintaining the orientation error estimate includes processing, using the processing module, incoming measurements to update an angular drift rate estimate for the first angular rate measurement, $\omega_{m,A/l}$, and/or the second angular rate measurement, $\omega_{m,P/l}$, based on at least the frame misalignment, wherein the updated orientation estimate and the frame misalignment are processed together with the updated angular drift rate estimate.

In some embodiments, processing the updated orientation estimate, the frame misalignment and the updated angular drift rate estimate is performed as part of updating the angular drift rate estimate and/or the orientation estimate.

The processing module may be configured to process the incoming measurements by repeatedly processing each new incoming measurements and/or provide the updated orientation estimate in response to receiving each new incoming measurements.

In some embodiments, the moving platform is a self-propelled vehicle for transportation of one or more humans, such as an aircraft, a rotorcraft, a land vehicle, a watercraft or a moving railway carriage platform, and preferably a fighter jet and/or a utility helicopter.

In some embodiments, the moving platform is configured to undergo a non-linear motion relative to an external inertial reference frame by affecting a change in velocity. The moving platform undergoing a non-linear motion may correspond to moving in a substantially straight line with a non-constant speed or along a curved trajectory relative to an external inertial reference frame, such as the ground.

In some embodiments, the object is a helmet for a pilot, such as an aircraft crew helmet, comprising one or more of an audio headset, a head-worn display and a tactile user feedback. The orientation tracking system may be a head orientation tracking system, wherein the object preferably comprises a helmet, glasses and/or a 3D audio headset. This provides that the orientation of a pilot's head can be tracked "by proxy", by tracking the orientation of an object which follows the pilots' head.

In some embodiments, the orientation tracking system provides a corrected orientation estimate representing a 3-axis orientation of the object relative to the platform as an input parameter to a control system configured to provide 3D audio to a user wearing said object and being transported by means of the moving platform, preferably so that said 3D audio is perceivable as spatially located relative to the moving platform. The user may in embodiments of the invention be one or more persons operating the means for transportation, such as e.g. one or more pilots, crew members, passengers and the like. In other embodiments of the invention, the user is a plurality of persons comprising one or more passengers being transported by the moving platform, e.g. for amusement trips or guided tours such as rollercoaster trips, sightseeing events and the like. In yet other embodiments of the invention, the user is one or more persons comprising a pilot, a co-pilot, a navigator, a crewmate, a gunner, a reconnaissance officer, a training instructor or ground crew.

In some embodiments, the orientation tracking system provides a corrected orientation estimate representing a 3-axis orientation of the object relative to the platform as an input parameter to a control system configured to provide visual orientation based information to a user wearing said object and being transported by means of the moving platform, preferably at a head worn display attached to said object, such as a helmet mounted display or a display on glasses worn by said user. The helmet mounted display (HMD) may e.g. be a display system of an "Integrated Helmet And Display Sight System" (IHADSS), a Shchel-3UM HMD, a Display and sight helmet, also called a "DASH" system, a Joint Helmet-Mounted Cueing System (JHMCS), a Scorpion Helmet Mounted Cueing System (HMCS) and/or the like.

In some embodiments, the corrected orientation estimate is based, at least in part, on further misalignment corrections determined by means of further misalignment mitigation arrangements, such as optical and/or magnetic misalignment mitigation arrangements.

In some embodiments, the angular rate sensors are MEMS gyroscope sensors and/or wherein the accelerometers are MEMS accelerometers.

In some embodiments, the object is arranged to be co-moving with the moving platform and to be both rotatable and substantially movable relative to the moving platform. By substantially movable may be understood that the object can be moved to a certain extent, while in use, while remaining generally within a confined area of the moving platform or an intended area of use fixed relative to the moving platform, such as within a region no further than 10 meters from the moving platform.

In some embodiments, the orientation tracking system includes a first sensor unit which comprises the first inertial sensor group, the processing module, the alignment module and the output module, said first sensor unit being configured to be installed within and/or fixed to a moving platform; and wherein the orientation tracking system includes a second sensor unit which comprises the second inertial sensor group, said second sensor unit operably connectable to the first sensor unit and being configured to be installed within and/or attached to an object associated with the moving platform. This may provide an advantage e.g. in the form of a more modular solution for an orientation tracking system which can be easily installed or removed.

In some embodiments, the processing module is or comprises a hardware processor configured with a memory and optionally a communications interface connected to a control system. Having a communications interface may provide that the orientation tracking system can exchange information with the control system, such as to interact with electronic components associated with the moving platform and/or the object.

Disclosed herein is, in a third aspect of the present disclosure, a non-transitory computer readable medium storing a computer program product comprising instructions which, when executed by a hardware processor comprised in an orientation tracking system according to the second aspect, are configured for carrying out the steps of the method according to the first aspect.

Disclosed herein is, in a fourth aspect of the present disclosure, a self-propelled vehicle comprised in the set of aircraft, aeroplanes, helicopters, motor vehicles and watercraft, wherein an orientation tracking system according to the second aspect is operably installed in said self-propelled vehicle to move substantially with the self-propelled vehicle as part of a moving platform. The orientation tracking system may for example be installed in a cockpit or fuselage portion of the self-propelled vehicle. In some embodiments, the self-propelled vehicle is selected from a group consisting of aircraft, aeroplanes, helicopters, motor vehicles and watercraft.

In some embodiments, the self-propelled vehicle comprises a propulsion system, such as an internal combustion engine, a jet engine or an electric motor, for affecting a change in velocity of the moving platform, and accordingly of an object co-moving therewith, in a desired direction. Affecting a change in velocity may include changes in either one or both of the instantaneous speed and heading of the vehicle.

Disclosed herein is, in a fifth aspect of the present disclosure, use of an orientation tracking system according to the second aspect in an aircraft, such as a fighter jet, for providing radio channel separation to a pilot or aircrew member using 3D audio effects relative to the orientation of a pilot-worn object, such as a helmet, to spatially locate each audio source at a separate location relative to a moving platform of said aircraft. This may for example provide one or more of the advantages described in relation to the other aspects, such as an improved user experience for the pilot.

**Brief description of the drawings**

Various examples are described hereinafter with reference to the figures. Like reference numerals refer to like elements throughout. Like elements will, thus, not be described in detail with respect to the description of each figure. It should also be noted that the figures are only intended to facilitate the description of the examples. They are not intended as an exhaustive description of the claimed invention or as a limitation on the scope of the claimed invention. In addition, an illustrated example needs not have all the aspects or advantages shown. An aspect or an advantage described in conjunction with a particular example is not necessarily limited to that example and can be practiced in any other examples even if not so illustrated, or if not so explicitly described.

Figure 1 illustrates an orientation tracking system comprising a first inertial sensor group fixed to a moving platform and a second inertial sensor group attached to an object co-moving with and rotatable relative to the moving platform.

Figure 2 illustrates a moving platform in the form of a piloted aircraft, wherein an orientation tracking system according to one or more embodiments of the present disclosure is operably installed in said aircraft to be used by a pilot.

Figure 3a illustrates a moving platform in the form of a self-propelled vehicle, e.g. in the form of a piloted aircraft as illustrated in Fig. 2, undergoing a non-linear motion relative to an external inertial reference frame, such as the ground.

Figure 3b illustrates a moving platform in the form of a self-propelled vehicle, e.g. in the form of a piloted aircraft as illustrated in Fig. 2, wherein a spatial orientation of a co-moving and rotatable object is being tracked by an orientation tracking system.

Figure 3c illustrates an object co-moving and rotatable relative to a moving platform, e.g. in the form of a self-propelled vehicle as illustrated in Fig. 3b, wherein the object is worn by a user being transported by said moving platform.

Figure 4 illustrates a method of tracking an orientation of an object with respect to a moving platform based on angular rate measurements and acceleration measurements received from inertial sensors provided at the object and at the moving platform.

Figure 5 illustrates a time-series of example data of a common acceleration affecting an aircraft and a pilot co-moving with said aircraft, wherein the aircraft is undergoing a number of high-g maneuvers relative to an external reference frame.

Figure 6 illustrates a time-series of example data of a head tracking algorithm which updates an orientation estimate and provides a corrected orientation estimate for the pilot's head relative to the aircraft during high-g maneuvers, as illustrated in Fig. 5.

**Description of examples**

Exemplary examples will now be described more fully hereinafter with reference to the accompanying drawings. In this regard, the present examples may have different forms and should not be construed as being limited to the descriptions set forth herein. Accordingly, the examples are merely described below, by referring to the figures, to explain aspects. As used herein, the term "and/or" includes any and all combinations of one or more of the associated listed items. Expressions such as "at least one of," when preceding a list of elements, modify the entire list of elements and do not modify the individual elements of the list.

The spatially relative terms "lower" or "bottom" and "upper" or "top", "below", "beneath", "less", "above", and the like, may be used herein for ease of description to describe the relationship between one element or component and another element or component as illustrated in the drawings. It will be understood that the spatially relative terms are intended to encompass different orientations of the device in use or operation, in addition to the orientation depicted in the drawings. For example, in the case where a device illustrated in the drawings is turned over, elements described as being on the "lower" side of other elements, or "below" or "beneath" another element would then be oriented on "upper" sides of the other elements, or "above" another element. Accordingly, the illustrative term "below" or "beneath" may include both the "lower" and "upper" orientation positions, depending on the particular orientation of the figure. Similarly, if the device in one of the figures is turned over, elements described as "below" or "beneath" other elements would then be oriented "above" the other elements. The exemplary terms "below" or "beneath" can, therefore, encompass both an orientation of above and below, and thus the spatially relative terms may be interpreted differently depending on the orientations described.

Throughout the specification, when an element is referred to as being "connected" to another element, the element is "directly connected" to the other element, or "electrically connected" to the other element with one or more intervening elements interposed therebetween.

The terminology used herein is for the purpose of describing particular examples only and is not intended to be limiting. As used herein, the singular forms "a," "an," and "the" are intended to include the plural forms, including "at least one," unless the content clearly indicates otherwise. "At least one" is not to be construed as limiting "a" or "an." It will be further understood that the terms "comprises," "comprising," "includes" and/or "including," when used in this specification, specify the presence of stated features, integers, steps, operations, elements, and/or components, but do not preclude the presence or addition of one or more other features, integers, steps, operations, elements, components, and/or groups thereof.

It will be understood that, although the terms "first," "second," "third," and the like may be used herein to describe various elements, these elements should not be limited by these terms. These terms are only used to distinguish one element from another element. Thus, "a first element" discussed below could be termed "a second element" or "a third element," and "a second element" and "a third element" may be termed likewise without departing from the teachings herein.

"About", "approximately" or "substantially" as used herein is inclusive of the stated value and means within an acceptable range of deviation for the particular value as determined by one of ordinary skill in the art, considering the measurement in question and the error associated with measurement of the particular quantity (i.e., the limitations of the measurement system). For example, "substantially" may mean within one or more standard deviations, or within $\pm$ 30%, 20%, 10%, 5% of the stated value.

Unless otherwise defined, all terms used herein (including technical and scientific terms) have the same meaning as commonly understood by those skilled in the art to which this invention pertains. It will be further understood that terms, such as those defined in commonly used dictionaries, should be interpreted as having a meaning that is consistent with their meaning in the context of the relevant art and will not be interpreted in an idealized or overly formal sense unless expressly so defined in the present specification.

Exemplary examples are described herein with reference to cross section illustrations that are schematic illustrations of idealized examples, wherein like reference numerals refer to like elements throughout the specification. As such, variations from the shapes of the illustrations as a result, for example, of manufacturing techniques and/or tolerances, are to be expected. Thus, examples described herein should not be construed as limited to the particular shapes of regions as illustrated herein but are to include deviations in shapes that result, for example, from manufacturing. For example, a region illustrated or described as flat may have rough and/or nonlinear features. Moreover, sharp angles that are illustrated may be rounded. Thus, the regions illustrated in the figures are schematic in nature and their shapes are not intended to illustrate the precise shape of a region and are not intended to limit the scope of the present claims. Some of the parts which are not associated with the description may not be provided in order to specifically describe exemplary examples of the present disclosure.

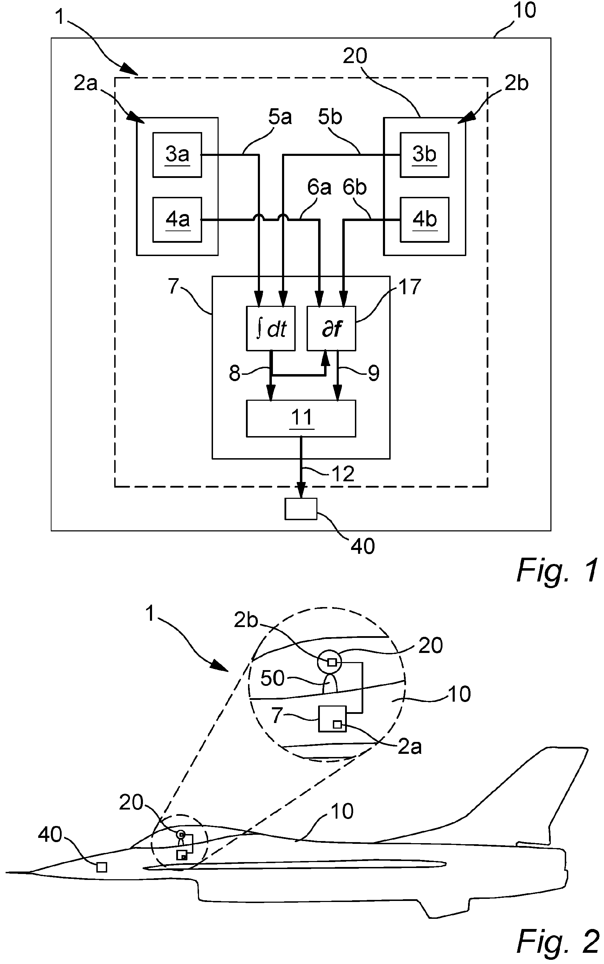

Figure 1 is an illustration of an orientation tracking system 1 for orientation tracking of an object 20 relative to a moving platform 10 according to a first embodiment of the present disclosure. The orientation tracking system 1 comprises a first inertial sensor group 2a configured to be fixed to a moving platform 10. The first inertial sensor group 2a is shown here comprising a first angular rate sensor 3a and a first accelerometer 4a. The first angular rate sensor 3a is configured to provide a first angular rate measurement 5a. The first angular rate measurement 5a represents an angular rate measurement, $\omega_{m,A/I}$, of angular rates of rotation of a moving platform 10 as seen from an inertial reference frame when the first inertial sensor group 2a is fixed to that moving platform 10. The first angular rate sensor 3a may for example be configured to provide an output 5a representing a measurement of angular rates of rotation of the moving platform 10 about a plurality of substantially perpendicular axes, such as two or three axes. The first accelerometer 4a is configured to provide a first acceleration measurement 6a. The first acceleration measurement 6a represents an acceleration measurement, $\boldsymbol{a}_{m,A/I}$, of linear acceleration of a moving platform 10, as seen from an inertial reference frame or as experienced by an observer travelling with the moving platform 10, when the first inertial sensor group 2a is fixed to that moving platform 10. The first acceleration sensor 4a may, as yet another example, be configured to provide an output 6a representing a measurement of linear acceleration of the moving platform 10 along a plurality of substantially perpendicular axes, such as two or three axes. The first inertial sensor group 2a is thus shown providing a first output 5a,6a representing a first angular rate measurement 5a and a first acceleration measurement 6a obtained relative to the moving platform 10 to which it is fixed.

The orientation tracking system 1 further comprises a second inertial sensor group 2b configured to be attached to an object 20 co-moving with and rotatable relative to the moving platform 10. The second inertial sensor group 2b is shown here comprising a second angular rate sensor 3b and a second accelerometer 4b. The second angular rate sensor 3b is configured to provide a second angular rate measurement 5b. The second angular rate measurement 5b represents an angular rate measurement, $\omega_{m,P/I}$, of angular rates of rotation of an object 20 as seen from an inertial reference frame when the second inertial sensor group 2b is attached to that object 20. The second angular rate sensor 3b may for example be configured to provide an output 5b representing a measurement of angular rates of rotation of the object 20 about a plurality of substantially perpendicular axes, such as two or three axes. The second accelerometer 4b is configured to provide a second acceleration measurement 6b. The second acceleration measurement 6b represents an acceleration measurement, $\boldsymbol{a}_{m,P/I}$, of linear acceleration of an object 20, as seen from an inertial reference frame or as experienced by an user wearing the object 20, when the second inertial sensor group 2b is attached to that object 20. The second acceleration sensor 4b may, as yet another example, be configured to provide an output 6b representing a measurement of linear acceleration of the object 20 along a plurality of substantially perpendicular axes, such as two or three axes. The second inertial sensor group 2b is thus shown providing a second output 5b,6b representing a second angular rate measurement 5b and a second acceleration measurement 6b obtained relative to the object 20 to which the second inertial sensor group 2b is attached or configured to become attached.

The orientation tracking system 1 comprises a processing module 7 configured to process incoming measurements, including measurements 5a-b,6a-b from the first inertial sensor group 2a and/or the second inertial sensor group 2b. The processing module 7 is shown receiving a first output 5a,6a from the first inertial sensor group 2a representing an angular rate measurement 5a, and an acceleration measurement 6a. The processing module 7 is also shown receiving a second output 5b,6b from the second inertial sensor group 2b representing an angular rate measurement 5b and an acceleration measurement 6b. The first output 5a,6a and the second output 5b,6b may be received substantially simultaneously, at the processing module 7, for each step in repeatedly processing new incoming measurements. Alternatively or additionally, the first output 5a,6a and the second output 5b,6b may represent measurements recorded substantially simultaneously, or in a rapid succession after each other, from the first inertial sensor group 2a and/or the second inertial sensor group 2b.

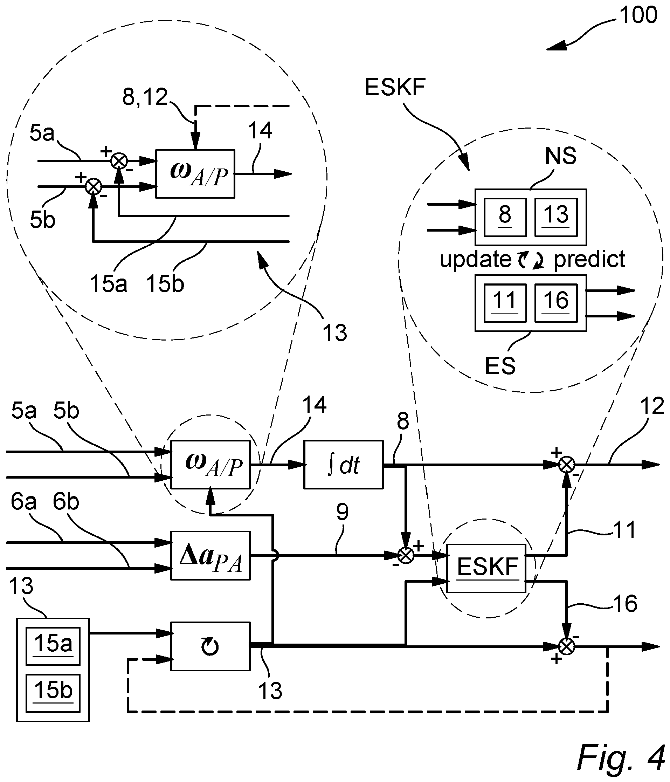

The processing module 7 is configured to process incoming measurements, such as by performing one or more of the steps of the method of tracking an orientation of an object 20 relative to a moving platform 10 according to the present disclosure, as will be discussed in further detail in relation to Fig. 4 below. The processing module 7 is, in this embodiment, configured to process each new measurement 5a-b, 6a-b as they are obtained from the inertial sensor groups 2a,2b. In response to receiving the first output 5a,6a and the second output 5b,6b from the first inertial sensor group 2a and the second inertial sensor group 2b, respectively, the processing module 7 may then be configured to iteratively perform the processing steps on said measurements 5a-b, 6a-b and to provide an output of the current iteration as input to the next iteration, in preparation for receiving further new measurements 5a-b, 6a-b at a later time.

As shown here, the processing module 7 is configured to process incoming angular rate measurements 5a-b obtained from the first and second angular rate sensors 3a-b, as received via the first and second outputs 5a-5b, 6a-b of the first and second inertial sensor groups 2a-b, to update an orientation estimate 8 of the object 20 relative to the moving platform 10 based on said angular rate measurements 5a-b. The orientation estimate 8 of the object 20 relative to the moving platform 10 may, for example, be iteratively updated, by accumulating a time-series of measurements 5a-b of angular rates of change in said orientation 8, such as by numerical integration of a function of at least the angular rate measurements 5a-b, e.g. by discrete summation of $\omega_{m,A/I}(t)$ and $\omega_{m,P/I}(t)$ over time t, as represented by "$\int dt$" in the present illustration.

The updated orientation estimate 8 is determined based on outputs 5a, 5b of the first and second angular rate sensor 3a, 3b and, in this embodiment, on a previous value of the orientation estimate 8. For example, an updated orientation estimate 8, $\Phi_{n+1}$, for time step n may be approximated as $\Phi_{n+1} = f(\Phi_n, \omega_{m,A/P}, \Delta t_n)$ where $\Delta t_n$ is the time step duration and $\Phi_n$ represents the previous value of the orientation estimate 8. Alternatively or additionally, the updated orientation estimate 8 may be calculated as a quaternion $q_{PA}$ being updated based on a corresponding quaternion update equation. Thus, it is possible to iteratively update an orientation estimate 8 of the object 20 with respect to the moving platform 10 based on an angular displacement rate, $\omega_{A/P}$, which is e.g. determined based on two 3-axis angular rate measurements 5a-b, $\omega_{m,A/I}$ and $\omega_{m,P/I}$, received via the first and second outputs 5a-b, 6a-b of the inertial sensor groups 2a-b. However, the updated orientation estimate 8 may be affected by gyroscopic drift.

The orientation tracking system 1 comprises an alignment module 17 configured to determine a frame misalignment 9 between the object 20 and the moving platform 10 based on the acceleration measurements 6a-b and the updated orientation estimate 8. The alignment module 17 is, in this embodiment, configured to receive acceleration measurements 6a-b obtained from the first and second acceleration sensors 4a-b, as received via the first and second outputs 5a-5b, 6a-b of the first and second inertial sensor groups 2a-b, and to determine a frame misalignment 9 therein between using the updated orientation estimate 8. The frame misalignment 9 may, for example, be calculated as a residual misalignment between a reference frame of the first inertial sensor group 2a and a reference frame of the second inertial sensor group 2b, when accounting for their relative orientation using the orientation estimate 8, as detectable e.g. by comparing acceleration measurements 6a-b from the first and second inertial sensor group 2a-b when subjected to a common acceleration or substantially identical specific forces, i.e. combinations of gravitational and linear acceleration. The frame misalignment 9 may, for example, be sequentially calculated, by processing a time-series of acceleration measurements 6a-b and corresponding orientation estimates 8, such as by applying a function of at least the acceleration measurements 6a-b and an orientation estimate 8, to determine an acceleration discrepancy $\Delta a_{PA}$ or a residual specific force, as represented by "$\partial f$" in the present illustration.

Thus, the frame misalignment 9 is determined based on outputs 6a, 6b of the first and second accelerometers 4a, 4b and the updated orientation estimate 8. For example, an acceleration discrepancy $\Delta a_{PA}$ may be calculated by comparison between two 3-axis acceleration measurements 6a-b, $a_{m,A/I}$ and $a_{m,P/I}$, when accounting for the relative orientation of the object 20 with respect to the moving platform 10 using the updated orientation estimate 8, such as by $\Delta a_{PA} = a_{m,P/I} - M_{PA} a_{m,A/I}$ where $M_{PA}$ is a transformation matrix representing a rotation according to the updated orientation estimate 8. The frame misalignment 9 may be a 3-component vector representation of angular misalignment, i.e. rotation angles about three mutually perpendicular axes, between a common acceleration observable by said acceleration measurements 6a-b, $a_{m,A/I}$ and $a_{m,P/I}$, when accounting for the relative orientation of the object 20 with respect to the moving platform 10. Determining a frame misalignment 9 based on the acceleration measurements 6a-b, $a_{m,A/I}$ and $a_{m,P/I}$, may thus be performed based on calculating an acceleration discrepancy $\Delta a_{PA}$ which represents angular misalignment e.g. due to gyroscopic drift affecting the updated orientation estimate 8.

The alignment module 17 is configured to maintain an orientation error estimate 11 for the orientation estimate 8. The orientation error estimate 11 is being maintained by processing the updated orientation estimate 8 and the frame misalignment 9 using the processing module 7. As shown here, a corrected orientation estimate 12 is being output from the orientation tracking system 1 to a device 40 which is associated with the moving platform 10. The orientation tracking system 1 is configured to output a corrected orientation estimate 12, such as by communicating via an output module, by correcting the orientation estimate 8 according to the orientation error estimate 11. For example, correcting the orientation estimate 8 may include adding or subtracting a value representing an orientation error estimate 11 to or from another value which represents an orientation estimate 8, to produce a corrected orientation estimate 12.

Thus, the orientation tracking system 1 may be configured for substantially real-time tracking of an orientation of an object 20 relative to a moving platform 10 by having a computational capacity, in the form of the processing module 7, process each of a plurality of incoming measurements received from the inertial sensor groups 2a-b to repeatedly output an up-to-date corrected orientation estimate 12 by iterating through said plurality of measurements using said computational capacity.

Processing incoming measurements may include receiving and processing, using the processing module 7, a plurality of measurements or sets of measurements, including angular rate measurements 5a-b and acceleration measurements 6a-b simultaneously or substantially coincidently obtained from the first inertial sensor group 2a and the second inertial sensor group 2b. Processing the updated orientation estimate 8 and the frame misalignment 9 may accordingly be performed for each of the plurality of measurements or sets of measurements 5a-b, 6a-b by repeatedly and/or sequentially performing calculations on incoming measurements comprised in the most recently received outputs 5a-b, 6-a by iteratively updating values based on prior outputs.

Figure 2 is an illustration of a moving platform 10 comprising an orientation tracking system 1 in an embodiment according to the present disclosure. The moving platform 10 is shown in the form of a piloted aircraft, wherein an orientation tracking system 1 according to one or more embodiments of the present disclosure is operably installed in said piloted aircraft 10 to be used by a pilot 50. The moving platform 10 comprises a device 40, which is configured to receive orientation tracking information about the pilot 50, or about an object 20 worn by the pilot 50, and to interact with said aircraft 10 to generate spatially localized stimuli for the pilot 50 using said information.

The zoom insert of a cockpit section of the aircraft 10 shows a pilot 50 travelling with the aircraft 10, i.e. positioned inside said cockpit, wherein a first inertial sensor group 2a is fixed to the aircraft 10 and connected to a second inertial sensor group 2b attached to an object 20 worn by the pilot 50. Here, the orientation tracking system 1 is shown comprising a processing module 7 installed or fixedly located at the aircraft 10, so that the first inertial sensor group 2a is fixed to the aircraft 10 and the second inertial sensor group 2b is operably connectable to the processing module 7. It may be envisioned that the second inertial sensor group 2b is connectable to another part of the orientation tracking system 1, such as the processing module 7, either by wired connections or a short-range wireless communication system.

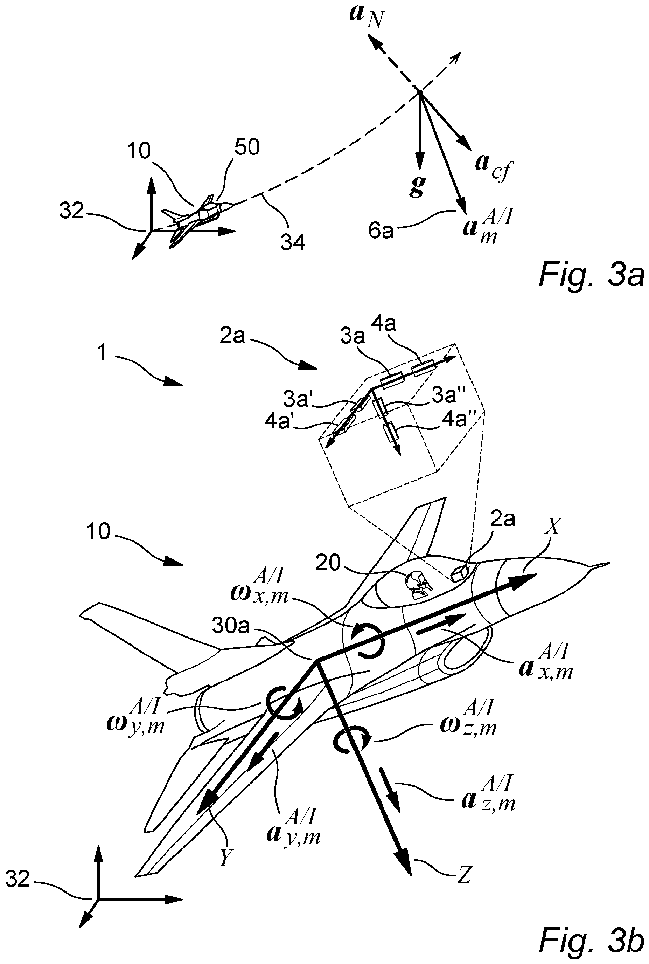

Figure 3a is an illustration of a moving platform 10 in the form of a self-propelled vehicle comprising an orientation tracking system 1 in an embodiment according to the present disclosure. The self-propelled vehicle 10 may for example be a piloted aircraft, such as illustrated in Fig. 2. The self-propelled vehicle 10 is moving along a trajectory 34 relative to an external reference frame 32, or such as the ground, which corresponds to the vehicle 10 undergoing a non-linear motion relative to the external inertial reference frame 32, i.e. by affecting a change in velocity of the vehicle 10. In this example, the vehicle 10 is performing a pull up, or "+g", maneuver at a constant speed resulting in a normal acceleration $a_N$ pointing upward relative to the vehicle 10. An observer 50 travelling with the vehicle 10 during such a maneuver thus experiences a centripetal acceleration $a_{cf}$ opposing the normal acceleration $a_N$, in addition to a gravitational acceleration $g$ due to Earth's gravity. A measurement of acceleration 6a, i.e. the resultant specific force affecting the observer 50, will thus be a vector sum of the centripetal acceleration $a_{cf}$ and the gravitational acceleration $g$, hence obtaining an acceleration measurement $a_m^{A/I}$ of the vehicle 10 as shown.

Figure 3b is an illustration of a moving platform 10 in the form of a self-propelled vehicle, e.g. in the form of a piloted aircraft as illustrated in Fig. 2, wherein a spatial orientation of an object 20 co-moving and rotatable with respect to a substantial body of the self-propelled vehicle 10 is being tracked by an orientation tracking system 1.

A first inertial sensor group 2a is shown fixed to the vehicle 10. A zoom insert of the first inertial sensor group 2a here shows the first inertial sensor group 2a comprising a first angular rate sensor in the form of a 3-axis angular rate sensor 3a,3a',3a". The 3-axis angular rate sensor 3a,3a',3a" includes three angular rate sensors 3a, 3a' and 3a" which are arranged substantially mutually perpendicular to each other. The first inertial sensor group 2a is further shown comprising a first accelerometer in the form of a 3-axis accelerometer 4a,4a',4a". The 3-axis accelerometer 4a,4a',4a" includes three accelerometers 4a, 4a' and 4a" arranged substantially mutually perpendicular to each other, and pairwise aligned with the three angular rate sensors 3a,3a',3a".

A reference frame 30a defined relative to the vehicle 10 is shown consisting of three mutually perpendicular axes; an X-axis generally in the forward direction, a Y-axis in the starboard or right-hand direction and a Z-axis in the downward direction. The principal axes X,Y,Z of the vehicle 10, which are defined according to the air norm DIN 9300, provide a useful first reference frame 30a for describing the motion and attitude of an aerial vehicle 10 relative to an external reference frame 32, such as the ground. In this example, the first angular rate sensor 3a and the first accelerometer 4a are aligned with the principal X-axis, so as to measure a roll rate $\omega_{x,m}^{A/I}$ and a primary acceleration component

$a_{x,m}^{A/I}$ about and along the X-axis, respectively. Further, the perpendicular-arranged first angular rate sensor 3a' and the perpendicular-arranged first accelerometer 4a' are aligned with the principal Y-axis, so as to measure a pitch rate $\omega_{y,m}^{A/I}$ and a secondary acceleration component $a_{y,m}^{A/I}$ about and along the Y-axis, respectively. Finally, the another perpendicular-arranged first angular rate sensor 3a" and the another perpendicular-arranged first accelerometer 4a" are aligned with the principal Z-axis, so as to further measure a yaw rate $\omega_{z,m}^{A/I}$ and a tertiary acceleration component $a_{z,m}^{A/I}$ about and along the Z-axis, respectively.

Thus, a first angular rate measurement, $\omega_{m,A/I}$, may be obtained from the first 3-axis angular rate sensor 3a,3a',3a" according to $\omega_{m,A/I} = \begin{bmatrix} \omega_{x,m}^{A/I}, & \omega_{y,m}^{A/I}, & \omega_{z,m}^{A/I} \end{bmatrix}^T$, i.e. as a 3-component vector representation of angular rates of rotation of the vehicle 10 about the principal axes X,Y,Z of the vehicle 10. In addition, a first acceleration measurement, $a_{m,A/I}$, may be obtained from the first 3-axis accelerometer 4a,4a',4a" according to $a_{m,A/I} = \begin{bmatrix} a_{x,m}^{A/I}, & a_{y,m}^{A/I}, & a_{z,m}^{A/I} \end{bmatrix}^T$, i.e. as another 3-component vector representation of acceleration of the vehicle 10 along the principal axes X,Y,Z.

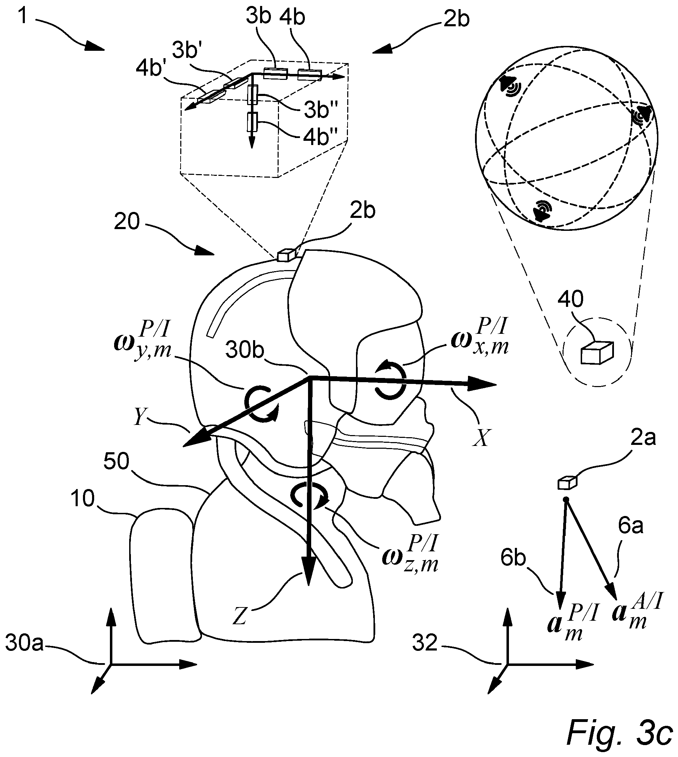

Figure 3c is an illustration of an object 20 co-moving with and rotatable relative to a moving platform 10, such as a piloted aircraft or self-propelled vehicle as illustrated in Figs. 2 and Fig. 3b, respectively. The object 20 is worn by a user 50, who is being transported along with said moving platform 10, such as sitting in a seat or similar.

The object 20 is shown here in the form of a pilot helmet, which may comprise one or more electronic components for generating stimuli for the pilot 50, such as visual and/or 3D audio representations, to provide an enhanced user experience pertaining to various aspects of operating controllable functions of the moving platform 10. It is advantageous that, by integrating an orientation tracking system 1 according to the present disclosure into the moving platform 10 and the object 20, an improved user experience may be provided by spatially locating said computer-generating stimuli, so they may appear for the pilot 50 to be stationary relative to the moving platform 10 when the pilot 50 moves or turns around, such as by head-turning or the like. In this example, the orientation tracking system 1 may communicate an output which represents an estimated orientation of the object 20 relative the moving platform 10 to a device 40, such as a control system for providing 3D audio to the pilot 50.

A pilot 50 travelling with the moving platform 10 experiences substantially the same combination of linear acceleration and gravitational acceleration as in an acceleration measurement $a_m^{A/I}$ obtained by an inertial sensor fixed to the moving platform, such as illustrated in Fig. 3b. However, due to different orientations of the principal axes X,Y,Z of the object 20, represented by a pilot's reference frame 30b, and the moving platform 10, represented by an aircraft reference frame 30a, the perceived direction of such a common acceleration vector will generally not coincide. A measurement of acceleration 6b, i.e. the resultant specific force affecting the observer 50, may in the above described cases have different vector representations, shown as an acceleration measurement $a_m^{P/I}$ of the object 20 compared to an acceleration measurement $a_m^{A/I}$ of the vehicle 10, wherein the latter is obtained as discussed in relation to Fig. 3b. This difference in how a common acceleration is measured with respect to each of the two reference frames 30, 30b provides that a frame misalignment can be determined.

A second inertial sensor group 2b is shown attached to the object 20. A zoom insert of the second inertial sensor group 2b here shows the second inertial sensor group 2b comprising a second angular rate sensor in the form of a 3-axis angular rate sensor 3b,3b',3b". The 3-axis angular rate sensor 3b,3b',3b" includes three angular rate sensors 3b, 3b' and 3b" which are arranged substantially mutually perpendicular to each other. The second inertial sensor group 2b is further shown comprising a second accelerometer in the form of a 3-axis accelerometer 4b,4b',4b". The second 3-axis accelerometer 4b,4b',4b" includes three accelerometers 4b, 4b' and 4b" arranged substantially mutually perpendicular to each other, and pairwise aligned with the three angular rate sensors 3b,3b',3b".

A reference frame 30b defined relative to the object 20 is shown consisting of three mutually perpendicular axes X,Y,Z using a similar axes convention as in Fig. 3b. The principal axes X,Y,Z of the object 20 provide another useful second reference frame 30b for describing the motion and attitude of an object 20 with respect to another reference frame 30a, such as relative to the moving platform 10. The second angular rate sensor 3b and the second accelerometer 4b are aligned with the principal X-axis, so as to measure a roll rate $\omega_{x,m}^{P/I}$ and a primary acceleration component $a_{x,m}^{P/I}$ about and along the X-axis, respectively. Furthermore, the perpendicular-arranged second angular rate sensor 3b' and the perpendicular-arranged second accelerometer 4b' are aligned with the principal Y-axis, so as to measure a pitch rate $\omega_{y,m}^{P/I}$ and a secondary acceleration component $a_{y,m}^{P/I}$ about and along the Y-axis, respectively. Finally, the another perpendicular-arranged second angular rate sensor 3b" and the another perpendicular-arranged second accelerometer 4b" are aligned with the principal Z-axis, so as to further measure a yaw rate $\omega_{z,m}^{P/I}$ and a tertiary acceleration component $a_{z,m}^{P/I}$ about and along the Z-axis, respectively.

A second angular rate measurement, $\omega_{m,P/I}$, is obtainable from the second 3-axis angular rate sensor 3b,3b',3b" according to $\omega_{m,P/I} = \left[\omega_{x,m}^{P/I}, \quad \omega_{y,m}^{P/I}, \quad \omega_{z,m}^{P/I}\right]^{T}$, i.e. as a 3-component vector representation of angular rates of rotation of the object 20 about the principal axes X,Y,Z of the object 20. In addition, a second acceleration measurement, $a_{m,P/I}$, is obtainable from the second 3-axis accelerometer 4b,4b',4b" according to $a_{m,P/I} = \left[a_{x,m}^{P/I}, \quad a_{y,m}^{P/I}, \quad a_{z,m}^{P/I}\right]^{T}$, i.e. as another 3-component vector representation of acceleration of the object 10 along the principal axes X,Y,Z.

The illustrations in Figures 3a, 3b and 3c and above discussions associated therewith may be regarded as three different perspectives of the same example of an orientation tracking system 1, which may be useful to understand the present disclosure. In this regard, Fig. 3a is seen from the perspective of an external reference frame 32, such as at the ground, Fig. 3b is seen from the perspective of a moving platform 10, such as a piloted aircraft, and Fig. 3c is seen from the perspective of a user 20, such as a pilot.

Figure 4 is an illustration of a method 100 of tracking an orientation of an object with respect to a moving platform, such as illustrated in Figs. 1-2 and Figs. 3a-c, wherein the object is co-moving with and rotatable relative to said moving platform. In a first step of the method 100, outputs 5a-b, 6a-b are received from inertial sensor groups of an orientation tracking system, as for example discussed in relation to Fig. 1 above.

A first output 5a,6a is received from a first inertial sensor group fixed to a moving platform, the first output 5a,6a comprising an angular rate measurement 5a, $\omega_{m,A/I}$, and an acceleration measurement 6a, $a_{m,A/I}$, obtained from a first angular rate sensor and a first accelerometer at to the moving platform, respectively. A second output 5b,6b is received from a second inertial sensor group attached to an object, wherein the object is co-moving with and rotatable relative to the moving platform, and the second output 5b,6b comprising another angular rate measurement 5b, $\omega_{m,P/I}$, and another acceleration measurement 6b, $a_{m,P/I}$, obtained from a second angular rate sensor and a second accelerometer fixedly positioned at the object, respectively.

In a subsequent step of the method 100, an angular displacement rate 14, $\omega_{A/P}$, is calculated based in part on the angular rate measurement 5a, $\omega_{m,A/I}$, obtained for the moving platform and the another angular rate measurement 5b, $\omega_{m,P/I}$, obtained for the object. Although not explicitly shown here, it is understood that the calculation of the angular displacement rate 14, $\omega_{A/P}$, may further be based on one or more values 8,9,11,12,13,16 derived by performing one or more of the steps of the method 100 or based on additional measurements obtained from yet further angular rate sensors. In a yet further embodiment of the present disclosure, the angular displacement rate 14, $\omega_{A/P}$, may be calculated based on the angular rate measurements 5a-b, $\omega_{m,A/I}$ and $\omega_{m,P/I}$, and the orientation estimate 8, by using a transformation matrix $M_{PA}$ which represents a rotation according to said orientation estimate 8. Calculating an angular displacement rate 14, $\omega_{A/P}$, between an object and a moving platform provides that an orientation estimate 8, $\Phi_e$, of the object 20 relative to the moving platform 10 can be determined by numerical integration because the rate of change of said orientation estimate 8 is determined by said angular displacement rate 14, $\omega_{A/P}$. Thus, updating the orientation estimate 8 of the object relative to the moving platform may include calculating an angular displacement rate 14, $\omega_{A/P}$, as shown here.

In another subsequent step of the method 100, a frame misalignment 9 is determined between the object and the moving platform based on the acceleration measurement 6a, $a_{m,A/I}$, obtained for the moving platform by comparison to a value based on the another acceleration measurement, 6b, $a_{m,P/I}$, obtained for the object. Comparing the acceleration measurements 6a-b, $a_{m,A/I}$ and $a_{m,P/I}$, may for example include to calculate an acceleration discrepancy, $\Delta a_{PA}$, as

discussed above in relation to Fig. 1. Although not explicitly shown here, it is further understood that the determination of the frame misalignment 9 by calculating an acceleration discrepancy, $\Delta\boldsymbol{a}_{PA}$, between the acceleration measurements 6a,6b, $\boldsymbol{a}_{m,A/I}$ and $\boldsymbol{a}_{m,P/I}$, may further be based on one or more values 8,11,12,13,14,16 derived by performing one or more of the steps of the method 100 or based on additional measurements obtained from auxiliary sensors or yet further accelerometers. In a yet further embodiment of the present disclosure, the frame misalignment 9 may be calculated based on the acceleration measurements 6a-b, $\boldsymbol{a}_{m,A/I}$ and $\boldsymbol{a}_{m,P/I}$, and the orientation estimate 8,12, by using a transformation matrix $\boldsymbol{M}_{PA}$ which represents a rotation according to said orientation estimate 8,12. An angular drift rate estimate 13 for the angular rate measurements 5a-b, $\omega_{m,A/I}$ and $\omega_{m,P/I}$, is shown being updated based, at least in part, on the frame misalignment 9. The angular drift rate estimate 13 is shown comprising a first angular rate bias 15a, $\boldsymbol{b}_A$, for the angular rate measurement 5a, $\omega_{m,A/I}$, obtained for the moving platform by means of a first angular rate sensor fixed to said moving platform. The angular drift rate estimate 13 is further shown comprising a second angular rate bias 15b, $\boldsymbol{b}_P$, for the another angular rate measurement 5b, $\omega_{m,P/I}$, obtained for the object by means of a second angular rate sensor attached to said object. In this example, the first angular rate bias 15a, $\boldsymbol{b}_A$, for the angular rate measurement 5a, $\omega_{m,A/I}$, and/or the second angular rate bias 15b, $\boldsymbol{b}_P$, for the another angular rate measurement 5b, $\omega_{m,P/I}$, represent gyroscopic bias estimates 13 for the respective angular rate sensor being iteratively updated based, at least in part, on the frame misalignment 9. Thus, the updated orientation estimate 8 and the frame misalignment 9 may be processed together with the updated angular drift rate estimate 13, e.g. in subsequent steps.

By performing the step of the method 100, the angular drift rate estimate 13 for the angular rate measurements 5a-b, $\omega_{m,A/I}$ and $\omega_{m,P/I}$, is thus updated by repeatedly calculating angular rate biases 15a-b, $\boldsymbol{b}_A$ and $\boldsymbol{b}_P$, for the angular rate measurements 5a-b, $\omega_{m,A/I}$ and $\omega_{m,P/I}$, respectively, as a function of the orientation estimate 8, the angular displacement rate 14, the frame misalignment 9 and the previous values of said angular rate bias 15a-b, as indicated by a dashed line looping back around.

The first zoom insert shows further details of calculating the angular displacement rate 14, $\omega_{A/P}$, wherein the angular drift rate estimate 13 is used to calculate a more accurate value of the angular displacement rate 14, $\omega_{A/P}$, by correcting the angular rate measurement 5a, $\omega_{m,A/I}$, of the first output 5a,6a based on the first angular rate bias 15a, $\boldsymbol{b}_A$, and correcting the another angular rate measurement 5b, $\omega_{m,A/I}$, of the second output 5b,6b based on the second angular rate bias 15b, $\boldsymbol{b}_P$.

Because bias in angular rate measurements 5a-b of a gyro-sensor or an angular rate sensor in an inertial measurement unit is generally a slowly-varying noise or nearly constant offset, the first and second angular rate biases 15a-b, $\boldsymbol{b}_A$ and $\boldsymbol{b}_P$, affecting the angular rate measurements 5a-b may be modelled as predominantly affected by red noise, "1/f" noise or similar, i.e. according to Brownian-motion random walk. In the simplest model, the first angular rate bias 15a, $\boldsymbol{b}_A$, is affected by a first source of Brownian noise, $\boldsymbol{n}_{b,A}$, according to a first bias update equation $\dot{\boldsymbol{b}}_A(t) = \boldsymbol{n}_{b,A}(t)$, and the second angular rate bias 15b, $\boldsymbol{b}_P$, is affected by a second source of Brownian noise, $\boldsymbol{n}_{b,P}$, according to a second bias update equation $\dot{\boldsymbol{b}}_P(t) = \boldsymbol{n}_{b,P}(t)$. The first and second angular rate biases 15a-b, $\boldsymbol{b}_A$ and $\boldsymbol{b}_P$, of the angular drift rate estimate 13 may therefore be updated by iteratively estimating which corrections, $\Delta\boldsymbol{b}_A$ and $\Delta\boldsymbol{b}_P$, respectively, to apply to previous values of the first and second angular rate biases 15a-b, $\boldsymbol{b}_A$ and $\boldsymbol{b}_P$, for the current iteration to account for the noise $\boldsymbol{n}_{b,A}$, and $\boldsymbol{n}_{b,P}$ in the next iteration. This corresponds to modelling the biases as Brownian motion.

Accordingly, the angular drift rate estimate 13 is shown being iteratively updated by estimating a bias error 16 for both the first angular rate bias 15a, $\boldsymbol{b}_A$, and the second angular rate bias 15b, $\boldsymbol{b}_P$. A bias error 16 comprises an estimate of a first correction, $\Delta\boldsymbol{b}_A$, for the first angular rate bias 15a, $\boldsymbol{b}_A$, and/or a second correction, $\Delta\boldsymbol{b}_P$, for the second angular rate bias 15b, $\boldsymbol{b}_P$, such that corrected bias estimates can be found, e.g. as $\boldsymbol{b}_A - \Delta\boldsymbol{b}_A$ and $\boldsymbol{b}_p - \Delta\boldsymbol{b}_P$, based on the frame misalignment 9.

In this way, the angular drift rate estimate 13 is iteratively updated by estimating the bias error 16 for the first angular rate bias 15a, $\boldsymbol{b}_A$, and the second angular rate bias 15b, $\boldsymbol{b}_P$, of the angular drift rate estimate 13. By using an optimal filtering algorithm, such as a Kalman filter, it may be possible to estimate a value for the bias error 16 in order to minimize a residual error represented by the frame misalignment 9.

In yet another subsequent step of the method 100, an orientation error estimate 11 for the orientation estimate 8 is being maintained, using an error-state filter algorithm in the form of an Error State Kalman Filter ESKF. The orientation error estimate 11 is an estimate of a correction $\Delta\Phi_e$ for the updated orientation estimate 8, $\Phi_e$, using the acceleration measurements 6a-b, $\boldsymbol{a}_{m,A/I}$ and $\boldsymbol{a}_{m,P/I}$, such that a corrected orientation estimate 12 can be found, e.g. as $\Phi_e - \Delta\Phi_e$, based on the frame misalignment 9.

In the simplest model, as also described above in relation to the first and second bias update equations, the orientation estimate 8, $\Phi_e$, is affected by both stochastic noise and gyroscopic drift due to combinations of white noise terms, $\boldsymbol{n}_{w,A}$ and $\boldsymbol{n}_{w,P}$, and bias noise terms, $\boldsymbol{b}_{b,A}$ and $\boldsymbol{b}_{b,P}$, affecting the angular rate measurements, 5a-b. In this model, the orientation error estimate 11, $\Delta\Phi_e$, for the orientation estimate 8, $\Phi_e$, can for example be modelled according to the following continuous-time state equation:

$$\Delta\dot{\boldsymbol{\Phi}}_e(t) = -[\boldsymbol{\omega}_{A/P}(t)] \times \Delta\boldsymbol{\Phi}_e(t) - \boldsymbol{b}_A(t) - \boldsymbol{n}_{w,A}(t) + \boldsymbol{M}_{AP}(t)\,(\boldsymbol{b}_P(t) + \boldsymbol{n}_{w,P}(t))$$

, which allows for iteratively maintaining an orientation error estimate 11 based on a previous value of the orientation error estimate 11, $\Delta\Phi_e$, and known quantities 8,14.

In this way, an orientation error estimate 11 is maintained for the orientation estimate 8, by processing the updated orientation estimate 8, the frame misalignment 9 and the angular drift rate estimate 13 together, to provide a corrected orientation estimate 12. As shown here, a corrected orientation estimate 12 is being provided, e.g. to a device via an output module, as an output of the method 100, by at a last step correcting the updated orientation estimate 8 based on the orientation error estimate 11.

The second zoom insert shows further details of the error state filtering step ESKF, wherein processing the updated orientation estimate 8, the frame misalignment 9 and the angular drift rate estimate 13 is being performed to determine an orientation error estimate 11 by using an Error State Kalman Filter ESKF algorithm for an error-state model comprising a nominal state NS and an error state ES. As shown, the nominal state NS, $x$, comprises the orientation estimate 8 and the angular drift rate estimate 13, for which observations of the nominal state NS is a function of at least the frame misalignment 9. The nominal state NS, $x$, may for example be a 9-component vector representation according to $x(t) = [\Phi_e(t); \boldsymbol{b}_A(t); \boldsymbol{b}_P(t)]$. As shown, the error state ES, $\Delta x$, comprises the orientation error estimate 11 and a bias error estimate 16 for the angular drift rate estimate 13. Thus, the nominal state NS, $x$, may be updated iteratively based on the error state ES, $\Delta x$, as part of or subsequent to the error state filtering step, typically by vector addition, e.g. as $x(t_n) - \Delta x(t_n)$ for a time step $t_n$. The error state ES, $\Delta x$, may for example be a 9-component vector representation also corresponding to $x(t)$, e.g. according to $\Delta x(t) = [\Delta\Phi_e(t); \Delta\boldsymbol{b}_A(t); \Delta\boldsymbol{b}_P(t)]$. In this example, the error state ES, $\Delta x$, may be propagated forward from a time $t_n$, i.e. "predicted", to a subsequent time $t_{n+1}$ by a discrete time step $\Delta t$ according to a state transition matrix, $F_n$, based on the current value of the nominal state NS, x, the error state ES, $\Delta x$, and the time step $\Delta t$, e.g. as $\Delta x(t_{n+1}) = F_n(x(t_n); \Delta t)\,\Delta x(t_n)$. Thus, the error-state model may be propagated according to $\Delta x \leftarrow f(x, \Delta x, ...)$, which may provide one or more advantages relating to allowing for more efficient processing of each new incoming measurements 5a-b,6a-b with lower processing latency, enabling processing of time-series of a plurality of measurements or sets of measurements by repeatedly performing the steps of the method 100 and accurate orientation tracking of an object relative to a moving platform using fewer computational resources.

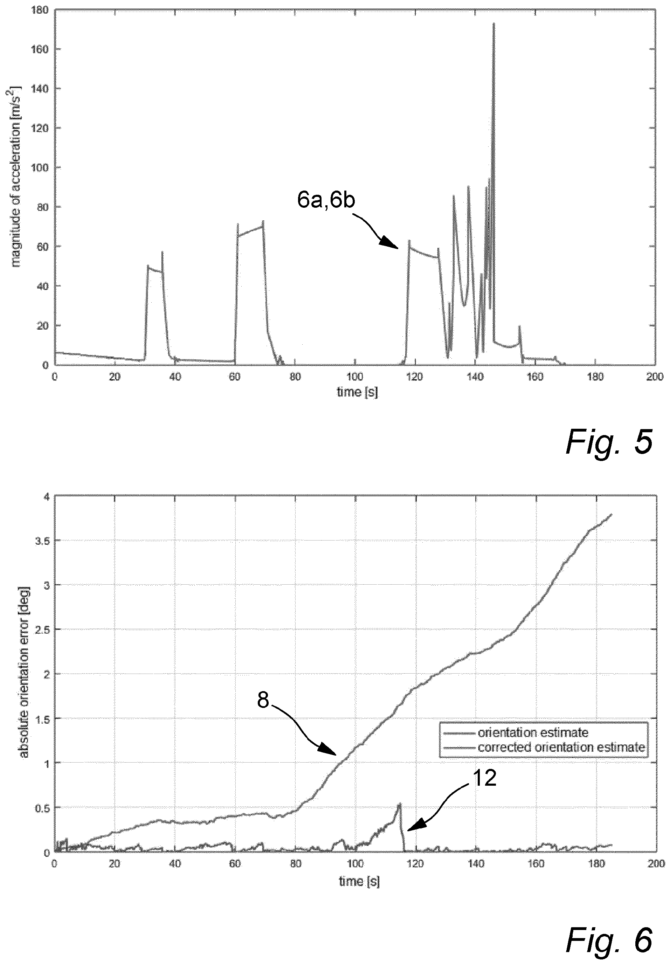

Figure 5 is an illustration of a time-series of example data of a common acceleration 6a,6b which affects an aircraft and a pilot co-moving with said aircraft. The aircraft is undergoing a number of high-g maneuvers relative to an external reference frame at short times intervals, e.g. at 30-40 seconds, 60-70 seconds, 120-130 seconds and ultimately in ultra-short acceleration bursts between 130 seconds and 150 seconds.

Figure 6 is an illustration of a time-series of example data as obtained by performing the steps of a method in one or more embodiments of the present disclosure, wherein a head tracking algorithm is performed according to the method illustrated in Fig. 4 using a computer processor to receive and process incoming measurements from a first inertial sensor group fixed to an aircraft and a second inertial sensor group being removably affixed to the head of a pilot of said aircraft, e.g. via the pilot's helmet. In response to receiving and processing a time-series of angular rate measurements and acceleration measurements, such as acceleration measurements illustrated in Fig. 5, performing the steps of the method of head tracking of the pilot's head relative to the aircraft according to the present disclosure provides a corresponding estimate 8,12 of the orientation of the pilot's head based on each measurement or set of measurements in the input time-series of measurements. As shown here, the orientation estimate 8 is observed to exhibit a rapidly increasing absolute orientation error, which grows from zero to about 4° total within the first 3 minutes of "flight" due in part to gyroscopic drift resulting from a bias instability affecting the gyro-sensors in the inertial sensor groups. A corrected orientation estimate 12 for the pilot's head relative to the aircraft is thus provided to mitigate the effects of gyroscopic drift, by correcting the updated orientation estimate 8 based on an orientation error estimate, as e.g. also discussed in relation to Fig. 4. Consequently, the corrected orientation estimate 12 is observed to exhibit an absolute orientation error substantially below 0.5° total throughout the 3 minute time-span, and moreover, the corrected orientation estimate 12 improves in accuracy during each of the short times intervals where the aircraft is undergoing a high-g maneuvers, as in Fig. 5, as is particularly noticeable at 120-130 seconds. The method of head tracking is seen to provide the advantage of mitigating the effects of gyroscopic drift by using time instances where the aircraft and the pilot are affected by a substantially common acceleration, different from gravitational acceleration, to maintain an orientation error estimate for the orientation estimate based on different measurements of said common acceleration at the aircraft and the pilot's head. It is furthermore an advantage that the method may provide reliable long-term orientation tracking of a pilot's head, with improved accuracy, at least for operational scenarios where the mean time between the aircraft undergoing non-linear motion, performing high-g maneuvers or the like is considerably lower than the time required for the bias instabilities to accumulate beyond an acceptable alignment error, such as 5 minutes for a bias instability of 1°/minute to produce a gyroscopic drift of about 5° total.

The invention is further described in the following items:

1. A method of tracking an orientation of an object (20) relative to a moving platform (10) by means of an orientation tracking system (1) comprising a first inertial sensor group (2a) fixed to the moving platform (10) and a second inertial sensor group (2b) attached to the object (20), wherein the object (20) is co-moving with and rotatable relative to the moving platform (10), the method comprising the steps of:

- receiving a first output (5a,6a) from the first inertial sensor group (2a) representing a first angular rate measurement (5a), $\omega_{m,A/I}$, and a first acceleration measurement (6a), $\boldsymbol{a}_{m,A/I}$, and receiving a second output (5b,6b) from the second inertial sensor group (2b) representing a second angular rate measurement (5b), $\omega_{m,P/I}$, and a second acceleration measurement (6b), $\boldsymbol{a}_{m,P/I}$;
- updating an orientation estimate (8) of the object (20) relative to the moving platform (10) based on the first angular rate measurement (5a), $\omega_{m,A/I}$, and the second angular rate measurement (5b), $\omega_{m,P/I}$;
- determining a frame misalignment (9) between the object (20) and the moving platform (10) based on the first acceleration measurement (6a), $\boldsymbol{a}_{m,A/I}$, the second acceleration measurement (6b), $\boldsymbol{a}_{m,P/I}$, and the updated orientation estimate (8);
- maintaining an orientation error estimate (11) for the orientation estimate (8) by processing the updated orientation estimate (8) and the frame misalignment (9); and
- communicating a corrected orientation estimate (12), of the object (20) relative to the moving platform (10), to a device (40), such as a control system (40), by correcting the updated orientation estimate (8) based on the orientation error estimate (11).

2. The method according to item 1, wherein updating an orientation estimate (8) of the object (20) relative to the moving platform (10) includes calculating an angular displacement rate (14), $\omega_{A/P}$, between the object (20) and the moving platform (10), such as $\omega_{A/P} = \omega_{m,A/I} - \boldsymbol{M}_{AP}\, \omega_{m,P/I}$ where $\boldsymbol{M}_{AP}$ is a transformation matrix.

3. The method according to item 2, wherein the orientation estimate (8) is determined as a quaternion $\boldsymbol{q}_{PA}$ based on the angular displacement rate (14), $\omega_{A/P}$, according to a quaternion update equation, such as by numerical integration of:

$$\dot{\boldsymbol{q}}_{PA}(t) = \tfrac{1}{2}\boldsymbol{q}_{PA}(t) \otimes \begin{bmatrix} 0 \\ \boldsymbol{\omega}_{A/P}(t) \end{bmatrix}.$$

4. The method according to any of the preceding items, wherein the frame misalignment (9) is determined based on an acceleration discrepancy, $\Delta\boldsymbol{a}_{PA}$, between the first acceleration measurement (6a), $\boldsymbol{a}_{m,A/I}$, and the second acceleration measurement (6b), $\boldsymbol{a}_{m,P/I}$, wherein one of the first output (6a) and the second output (6a;6b) is being transformed from a reference frame (30a;30b) of that output (6a;6b) to a reference frame (30b;30a) of another of the first output (6a) and the second output (6b), such as by rotation using the orientation estimate (8) of the object (20) relative to the moving platform (10), such as $\Delta\boldsymbol{a}_{PA} = \boldsymbol{a}_{m,P/I} - \boldsymbol{M}_{PA}\, \boldsymbol{a}_{m,A/I}$ where $\boldsymbol{M}_{PA}$ is a transformation matrix.

5. The method according to any of the preceding items, wherein the method further comprises the steps of:

- updating an angular drift rate estimate (13) for the first angular rate measurement (5a), $\omega_{m,A/I}$, and/or the second angular rate measurement (5b), $\omega_{m,P/I}$, based on at least the frame misalignment (9);

and wherein the updated orientation estimate (8) and the frame misalignment (9) are processed together with the updated angular drift rate estimate (13).

6. The method according to item 5, wherein the angular drift rate estimate (13) comprises a first angular rate bias (15a), $\boldsymbol{b}_A$, estimated for the first angular rate measurement (5a), $\omega_{m,A/I}$, of the first output (5a,6a) and/or a second angular rate bias (15b), $\boldsymbol{b}_P$, estimated for the second angular rate measurement (5b), $\omega_{m,P/I}$, of the second output (5b,6b) based on at least the frame misalignment (9).

7. The method according to item 6, wherein the angular drift rate estimate (13) is updated by estimating a bias error (16) for the first angular rate bias (15a), $\boldsymbol{b}_A$, and/or the second angular rate bias (15b), $\boldsymbol{b}_P$, which minimizes the frame misalignment (9).

8. The method according to item 6 or 7, wherein the method comprises correcting the first angular rate measurement (5a), $\omega_{m,A/I}$, of the first output (5a,6a) based on the first angular rate bias (15a), $\boldsymbol{b}_A$, and/or the second angular rate

measurement (5b), $\omega_{m,P/I}$, of the second output (5b,6b) based on the second angular rate bias (15b), $\boldsymbol{b}_P$, preferably said correcting step being prior to or part of updating the orientation estimate (8).

9. The method according to items 7 and 8, wherein the first angular rate measurement (5a) and the second angular rate measurement (5b) are corrected based on the first angular rate bias (15a), $\boldsymbol{b}_A$, the second angular rate bias (15b), $\boldsymbol{b}_P$, and the estimated bias error (16) for said biases (15a,15b).

10. The method according to any of items 5 to 9, wherein the angular drift rate estimate (13) for the first angular rate measurement (5a), $\omega_{m,A/I}$, and the second angular rate measurement (5b), $\omega_{m,P/I}$, is updated by repeatedly calculating an angular rate bias (15a, 15b) for one or both of the angular rate measurements (5a,5b) as a function of the orientation estimate (8), the angular displacement rate (14), the frame misalignment (9) and the previous value of said angular rate bias (15a,15b).

11. The method according to any of items 5 to 10, wherein processing the updated orientation estimate (8), the frame misalignment (9) and the updated angular drift rate estimate (13) further includes estimating an orientation uncertainty for the orientation estimate (8) and/or the corrected orientation estimate (12) based at least in part on a measurement uncertainty determined for each sensor (2a,2b).

12. The method according to any of items 5 to 11, wherein processing the updated orientation estimate (8), the frame misalignment (9) and the angular drift rate estimate (13) is based on an error-state filter algorithm, such as an Error State Kalman Filter (ESKF), preferably for an error-state model comprising:

- a nominal state (NS), x, comprising the orientation estimate (8) and the angular drift rate estimate (13), for which observations of the nominal state (NS) is a function of at least the frame misalignment (9); and
- an error state (ES), $\Delta\boldsymbol{x}$, comprising the orientation error estimate (11) and a bias error estimate (16) for the angular drift rate estimate (13),

wherein the error-state model is propagated according to $\Delta\boldsymbol{x} \leftarrow \boldsymbol{f}(\boldsymbol{x}, \Delta\boldsymbol{x}, ...)$.

13. The method according to any of the preceding items, wherein the orientation estimate (8) is a 3-axis orientation estimate (8) and/or the corrected orientation estimate (12) is a 3-axis corrected orientation estimate (12).

14. The method according to any of the preceding items, wherein the orientation error estimate (11) is maintained for the orientation estimate (8) by receiving a plurality of measurements including outputs (5a-b,6a-b) from the first inertial sensor group (2a) and from the second inertial sensor group (2b), and wherein processing the updated orientation estimate (8) and the frame misalignment (9) is performed for each of the plurality of measurements.

15. The method according to any of the preceding items, wherein the method further comprises the steps of:

- detecting an occurrence of non-linear motion of the moving platform (10) relative to an external inertial reference frame (32) and/or an occurrence of relative motion of the object (20) relative to the moving platform (10) based on the first acceleration measurement (6a), $\boldsymbol{a}_{mA/I}$, of the first output (5a,6a) and/or the second acceleration measurement (6b), $\boldsymbol{a}_{m,P/I}$, of the second output (5b,6b); and
- correcting the updated orientation estimate (8) based on the orientation error estimate (11) in accordance with detecting an occurrence of said motion.

16. The method according to any of the preceding items, wherein the orientation estimate (8) of the object (20) relative to the moving platform (10) is updated by repeatedly calculating an angular displacement rate (14), $\omega_{A/P}$, between the object (20) and the moving platform (10) as a function of the first angular rate measurement (5a), $\omega_{m,A/I}$, the second angular rate measurement (5b), $\omega_{m,A/I}$, and the previous value of said orientation estimate (8).

17. A orientation tracking system (1) for tracking an orientation of an object (20) relative to a moving platform (10), wherein the object (20) is co-moving with and rotatable relative to the moving platform (10), the orientation tracking system (1) comprising:

- a first inertial sensor group (2a) configured to be fixed to the moving platform (10);
- a second inertial sensor group (2b) attachable to the object (20);
- a processing module (7) configured to receive a first output (5a,6a) from the first inertial sensor group (2a) representing a first angular rate measurement (5a), $\omega_{m,A/I}$, and a first acceleration measurement (6a), $\boldsymbol{a}_{mA/I}$, and to receive a second output (5b,6b) from the second inertial sensor group (2b) representing a second angular rate measurement (5b), $\omega_{m,P/I}$, and a second acceleration measurement (6b), $\boldsymbol{a}_{m,P/I}$, and to process incoming measurements (5a-b,6a-b) to update an orientation estimate (8) of the object (20) relative to the moving platform (10) based on the first angular rate measurement (5a), $\omega_{m,A/I}$, and the second angular rate measurement (5b), $\omega_{m,P/I}$;

- an alignment module (17) configured to determine a frame misalignment (9) between the object (20) and the moving platform (10) based on the first acceleration measurement (6a), $\boldsymbol{a}_{m,A/I}$, the second acceleration measurement (6b), $\boldsymbol{a}_{m,P/I}$, and the updated orientation estimate (8) and to maintain an orientation error estimate (11) for the orientation estimate (8) by processing, using the processing module (7), the updated orientation estimate (8) and the frame misalignment (9); and

- an output module configured to output a corrected orientation estimate (12) of the object (20) relative to the moving platform (10) by correcting the updated orientation estimate (8) based on the orientation error estimate (11).

18. The orientation tracking system according to item 17, wherein the first inertial sensor group (2a) comprises a first 3-axis angular rate sensor (3a) and a first 3-axis accelerometer (4a), and wherein the second inertial sensor group (2b) comprises a second 3-axis angular rate sensor (3b) and a second 3-axis accelerometer (4b).

19. The orientation tracking system according to item 18, wherein:

- the first angular rate measurement (5a), $\omega_{m,A/I}$, of the first output (5a,6a) is obtained from the first 3-axis angular rate sensor (3a);
- the first acceleration measurement (6a), $\boldsymbol{a}_{m,A/I}$, of the first output (5a,6a) is obtained from the first 3-axis accelerometer (4a);
- the second angular rate measurement (5b), $\omega_{m,P/I}$, of the second output (5b,6b) is obtained from the second 3-axis angular rate sensor (3b); and
- the second acceleration measurement (5b), $\boldsymbol{a}_{mP/I}$, of the second output (5b,6b) is obtained from the second 3-axis accelerometer (4b).

20. The orientation tracking system according to any of items 17 to 19, wherein the frame misalignment (9) is determined based on outputs (6a, 6b) of the first and second 3-axis accelerometers (4a, 4b) and the updated orientation estimate (8), which is based on outputs (5a, 5b) of the first and second 3-axis angular rate sensor (3a, 3b).

21. The orientation tracking system according to any of items 17 to 20, wherein maintaining the orientation error estimate (11) includes processing, using the processing module (7), incoming measurements (5a-b,6a-b) to update an angular drift rate estimate (13) for the first angular rate measurement (5a), $\omega_{m,A/I}$, and/or the second angular rate measurement (5b), $\omega_{m,P/I}$, based on at least the frame misalignment (9), and wherein the updated orientation estimate (8) and the frame misalignment (9) are processed together with the updated angular drift rate estimate (13).

22. The orientation tracking system according to any of items 17 to 21, wherein the moving platform (10) is a self-propelled vehicle for transportation of one or more humans, such as an aircraft, a rotorcraft, a land vehicle, a watercraft or a moving railway carriage platform, and preferably a fighter jet and/or a utility helicopter.

23. The orientation tracking system according to any of items 17 to 22, wherein the moving platform (10) is configured to undergo a non-linear motion relative to an external inertial reference frame (32) by affecting a change in velocity.

24. The orientation tracking system according to any of items 17 to 23, wherein the object (20) is a helmet for a pilot, such as an aircraft crew helmet, comprising one or more of an audio headset, a head-worn display and a tactile user feedback.

25. The orientation tracking system according to item 24, wherein the orientation tracking system provides a corrected orientation estimate (12) representing a 3-axis orientation of the object (20) relative to the platform (10) as an input parameter to a control system (40) configured to provide 3D audio to a user (50) wearing said object (20) and being transported by means of the moving platform (10), preferably so that said 3D audio is perceivable as spatially located relative to the moving platform (10).

26. The orientation tracking system according to item 24, wherein the orientation tracking system provides a corrected orientation estimate (12) representing a 3-axis orientation of the object (20) relative to the platform (10) as an input parameter to a control system (40) configured to provide visual orientation based information to a user (50) wearing said object (20) and being transported by means of the moving platform (10), preferably at a head worn display attached to said object (20), such as a helmet mounted display or a display on glasses worn by said user (50).

27. The orientation tracking system according to any of item 17 to 26, wherein the corrected orientation estimate (12) is based, at least in part, on further misalignment corrections determined by means of further misalignment mitigation arrangements, such as optical and/or magnetic misalignment mitigation arrangements.

28. The orientation tracking system according to any of item 17 to 27, wherein the angular rate sensors (3a, 3b) are MEMS gyroscope sensors and/or wherein the accelerometers (4a, 4b) are MEMS accelerometers.

29. The orientation tracking system according to any of item 17 to 28, wherein the object (20) is arranged to be co-moving with the moving platform (10) and to be both rotatable and substantially movable relative to the moving platform (10).

30. The orientation tracking system according to item 29, wherein the orientation tracking system includes a first sensor unit which comprises the first inertial sensor group (2a), the processing module (7), the alignment module (17) and the output module, said first sensor unit being configured to be installed within and/or fixed to a moving platform (10); and wherein the orientation tracking system includes a second sensor unit which comprises the second inertial sensor group (2b), said second sensor unit operably connectable to the first sensor unit and being configured to be installed within and/or attached to an object (20) associated with the moving platform (10).

31. The orientation tracking system according to any of item 17 to 30, wherein the processing module is or comprises a hardware processor configured with a memory and optionally a communications interface connected to a control system.

32. A non-transitory computer readable medium storing a computer program product comprising instructions which, when executed by a hardware processor comprised in an orientation tracking system (1) according to item 31, are configured for carrying out the steps of the method according to any of items 1 to 16.

33. A self-propelled vehicle comprised in the set of aircraft, aeroplanes, helicopters, motor vehicles and watercraft, wherein an orientation tracking system (1) according to any of items 17 to 31 is operably installed in said self-propelled vehicle to move substantially with the self-propelled vehicle as part of a moving platform (10).

34. The self-propelled vehicle according to item 33, wherein the self-propelled vehicle comprises a propulsion system, such as an internal combustion engine, a jet engine or an electric motor, for affecting a change in velocity of the moving platform (10), and accordingly of an object (20) co-moving therewith, in a desired direction.

35. Use of an orientation tracking system (1) according to any of items 17 to 31 in an aircraft, such as a fighter jet, for providing radio channel separation to a pilot (50) or aircrew member using 3D audio effects relative to the orientation of a pilot-worn object (20), such as a helmet, to spatially locate each audio source at a separate location relative to a moving platform (10) of said aircraft.

**References**

1     Orientation tracking system
2a     First inertial sensor group
2b     Second inertial sensor group
3a     First angular rate sensor
3b     Second angular rate sensor
4a     First accelerometer
4b     Second accelerometer
5a     First angular rate measurement
5b     Second angular rate measurement
6a     First acceleration measurement
6b     Second acceleration measurement
7      Processing module

# EP 4 095 652 A1

8     Orientation estimate
9     Frame misalignment
10    Moving platform
11    Orientation error estimate
12    Corrected orientation estimate
13    Angular drift rate estimate
14    Angular displacement rate
15a    First angular rate bias
15b    Second angular rate bias
16    Bias error
17    Alignment module
20    Object
30a-b    Reference frame
32    External inertial reference frame
34    Trajectory
40    Control system
50    Observer
100    Method
ESKF    Error State Kalman Filter
ES    Error state
NS    Nominal state
$a_{m,A/I}$    Acceleration measurement for platform
$a_{m,P/I}$    Acceleration measurement for object
$\Delta a_{PA}$    Acceleration discrepancy
$a_{cf}$    Centripetal acceleration
$a_N$    Normal acceleration
$b_A$    First angular rate bias
$b_P$    Second angular rate bias
$g$    Gravitational acceleration
$M_{AP}$    Transformation matrix
$\omega_{m,A/I}$    Angular rate measurement for platform
$\omega_{x,m}^{A/I}$    Angular rate measurement x-component
$\omega_{y,m}^{A/I}$    Angular rate measurement y-component
$\omega_{z,m}^{A/I}$    Angular rate measurement z-component
$\omega_{m,P/I}$    Angular rate measurement for object
$\omega_{x,m}^{P/I}$    Angular rate measurement x-component
$\omega_{y,m}^{P/I}$    Angular rate measurement y-component
$\omega_{z,m}^{P/I}$    Angular rate measurement z-component
$\omega_{A/P}$    Angular displacement rate
$X, Y, Z$    Coordinate system axis

**Claims**

1. A method of tracking an orientation of an object (20) relative to a moving platform (10) by means of an orientation tracking system (1) comprising a first inertial sensor group (2a) fixed to the moving platform (10) and a second inertial sensor group (2b) attached to the object (20), wherein the object (20) is co-moving with and rotatable relative to the moving platform (10), the method comprising the steps of:

- receiving a first output (5a,6a) from the first inertial sensor group (2a) representing a first angular rate measurement (5a), $\omega_{m,A/I}$, and a first acceleration measurement (6a), $\boldsymbol{a}_{m,A/I}$, and receiving a second output (5b,6b) from the second inertial sensor group (2b) representing a second angular rate measurement (5b), $\omega_{mP/I}$, and a second acceleration measurement (6b), $\boldsymbol{a}_{m,P/I}$;
- updating an orientation estimate (8) of the object (20) relative to the moving platform (10) based on the first angular rate measurement (5a), $\omega_{m,A/I}$, and the second angular rate measurement (5b), $\omega_{m,P/I}$;
- determining a frame misalignment (9) between the object (20) and the moving platform (10) based on the first acceleration measurement (6a), $\boldsymbol{a}_{m,A/I}$, the second acceleration measurement (6b), $\boldsymbol{a}_{m,P/I}$, and the updated orientation estimate (8);
- maintaining an orientation error estimate (11) for the orientation estimate (8) by processing the updated orientation estimate (8) and the frame misalignment (9); and
- communicating a corrected orientation estimate (12), of the object (20) relative to the moving platform (10), to a device (40), such as a control system (40), by correcting the updated orientation estimate (8) based on the orientation error estimate (11).

2. The method according to claim 1, wherein updating an orientation estimate (8) of the object (20) relative to the moving platform (10) includes calculating an angular displacement rate (14), $\omega_{A/P}$, between the object (20) and the moving platform (10), such as $\omega_{A/P} = \omega_{m,A/I} - \boldsymbol{M}_{AP}\,\omega_{m,P/I}$ where $\boldsymbol{M}_{AP}$ is a transformation matrix.

3. The method according to any of the preceding claims, wherein the frame misalignment (9) is determined based on an acceleration discrepancy, $\Delta\boldsymbol{a}_{PA}$, between the first acceleration measurement (6a), $\boldsymbol{a}_{m,A/I}$, and the second acceleration measurement (6b), $\boldsymbol{a}_{m,P/I}$, wherein one of the first output (6a) and the second output (6a;6b) is being transformed from a reference frame (30a;30b) of that output (6a;6b) to a reference frame (30b;30a) of another of the first output (6a) and the second output (6b), such as by rotation using the orientation estimate (8) of the object (20) relative to the moving platform (10), such as $\Delta\boldsymbol{a}_{PA} = \boldsymbol{a}_{m,P/I} - \boldsymbol{M}_{PA}\,\boldsymbol{a}_{m,A/I}$ where $\boldsymbol{M}_{PA}$ is a transformation matrix.

4. The method according to any of the preceding claims, wherein the method further comprises the steps of:

- updating an angular drift rate estimate (13) for the first angular rate measurement (5a), $\omega_{m,A/I}$, and/or the second angular rate measurement (5b), $\omega_{m,P/I}$, based on at least the frame misalignment (9);

and wherein the updated orientation estimate (8) and the frame misalignment (9) are processed together with the updated angular drift rate estimate (13).

5. The method according to claim 4, wherein the angular drift rate estimate (13) comprises a first angular rate bias (15a), $\boldsymbol{b}_A$, estimated for the first angular rate measurement (5a), $\omega_{m,A/I}$, of the first output (5a,6a) and/or a second angular rate bias (15b), $\boldsymbol{b}_P$, estimated for the second angular rate measurement (5b), $\omega_{m,P/I}$, of the second output (5b,6b) based on at least the frame misalignment (9).

6. The method according to claim 5, wherein the angular drift rate estimate (13) is updated by estimating a bias error (16) for the first angular rate bias (15a), $\boldsymbol{b}_A$, and/or the second angular rate bias (15b), $\boldsymbol{b}_P$, which minimizes the frame misalignment (9).

7. The method according to any of claims 4 to 6, wherein processing the updated orientation estimate (8), the frame misalignment (9) and the angular drift rate estimate (13) is based on an error-state filter algorithm, such as an Error State Kalman Filter (ESKF), preferably for an error-state model comprising:

- a nominal state (NS), $\boldsymbol{x}$, comprising the orientation estimate (8) and the angular drift rate estimate (13), for which observations of the nominal state (NS) is a function of at least the frame misalignment (9); and
- an error state (ES), $\Delta\boldsymbol{x}$, comprising the orientation error estimate (11) and a bias error estimate (16) for the angular drift rate estimate (13),

wherein the error-state model is propagated according to $\Delta\boldsymbol{x} \leftarrow \boldsymbol{f}(\boldsymbol{x}, \Delta\boldsymbol{x}, ...)$.

8. The method according to any of the preceding claims, wherein the orientation estimate (8) is a 3-axis orientation estimate (8) and/or the corrected orientation estimate (12) is a 3-axis corrected orientation estimate (12).

9. The method according to any of the preceding claims, wherein the orientation estimate (8) of the object (20) relative to the moving platform (10) is updated by repeatedly calculating an angular displacement rate (14), $\omega_{A/P}$, between the object (20) and the moving platform (10) as a function of the first angular rate measurement (5a), $\omega_{m,A/I}$, the second angular rate measurement (5b), $\omega_{m,A/I}$, and the previous value of said orientation estimate (8).

10. A orientation tracking system (1) for tracking an orientation of an object (20) relative to a moving platform (10), wherein the object (20) is co-moving with and rotatable relative to the moving platform (10), the orientation tracking system (1) comprising:

- a first inertial sensor group (2a) configured to be fixed to the moving platform (10);
- a second inertial sensor group (2b) attachable to the object (20);
- a processing module (7) configured to receive a first output (5a,6a) from the first inertial sensor group (2a) representing a first angular rate measurement (5a), $\omega_{m,A/I}$, and a first acceleration measurement (6a), $a_{m,A/I}$, and to receive a second output (5b,6b) from the second inertial sensor group (2b) representing a second angular rate measurement (5b), $\omega_{m,P/I}$, and a second acceleration measurement (6b), $a_{m,P/I}$, and to process incoming measurements (5a-b,6a-b) to update an orientation estimate (8) of the object (20) relative to the moving platform (10) based on the first angular rate measurement (5a), $\omega_{m,A/I}$, and the second angular rate measurement (5b), $\omega_{m,A/I}$;
- an alignment module (17) configured to determine a frame misalignment (9) between the object (20) and the moving platform (10) based on the first acceleration measurement (6a), $a_{m,A/I}$, the second acceleration measurement (6b), $a_{m,P/I}$, and the updated orientation estimate (8) and to maintain an orientation error estimate (11) for the orientation estimate (8) by processing, using the processing module (7), the updated orientation estimate (8) and the frame misalignment (9); and
- an output module configured to output a corrected orientation estimate (12) of the object (20) relative to the moving platform (10) by correcting the updated orientation estimate (8) based on the orientation error estimate (11).

11. The orientation tracking system according to claim 10, wherein the first inertial sensor group (2a) comprises a first 3-axis angular rate sensor (3a) and a first 3-axis accelerometer (4a), and wherein the second inertial sensor group (2b) comprises a second 3-axis angular rate sensor (3b) and a second 3-axis accelerometer (4b).

12. The orientation tracking system according to claim 11, wherein:

- the first angular rate measurement (5a), $\omega_{m,A/I}$, of the first output (5a,6a) is obtained from the first 3-axis angular rate sensor (3a);
- the first acceleration measurement (6a), $a_{m,A/I}$, of the first output (5a,6a) is obtained from the first 3-axis accelerometer (4a);
- the second angular rate measurement (5b), $\omega_{m,P/I}$, of the second output (5b,6b) is obtained from the second 3-axis angular rate sensor (3b); and
- the second acceleration measurement (5b), $a_{m,P/I}$, of the second output (5b,6b) is obtained from the second 3-axis accelerometer (4b).

13. The orientation tracking system according to any of claims 10 to 12, wherein the object (20) is a helmet for a pilot, such as an aircraft crew helmet, comprising one or more of an audio headset, a head-worn display and a tactile user feedback.

14. The orientation tracking system according to claim 13, wherein the orientation tracking system provides a corrected orientation estimate (12) representing a 3-axis orientation of the object (20) relative to the platform (10) as an input parameter to a control system (40) configured to provide 3D audio to a user (50) wearing said object (20) and being transported by means of the moving platform (10), preferably so that said 3D audio is perceivable as spatially located relative to the moving platform (10).

15. The orientation tracking system according to claim 13, wherein the orientation tracking system provides a corrected orientation estimate (12) representing a 3-axis orientation of the object (20) relative to the platform (10) as an input parameter to a control system (40) configured to provide visual orientation based information to a user (50) wearing said object (20) and being transported by means of the moving platform (10), preferably at a head worn display attached to said object (20), such as a helmet mounted display or a display on glasses worn by said user (50).

*Fig. 1*

*Fig. 2*

*Fig. 3a*

*Fig. 3b*

Fig. 3c

*Fig. 4*

*Fig. 5*

*Fig. 6*

Europäisches
Patentamt

European
Patent Office

Office européen
des brevets

**EUROPEAN SEARCH REPORT**

Application Number

EP 21 17 5848

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 441 720 A1 (ROCKWELL COLLINS INC [US]) 13 February 2019 (2019-02-13) | 1-13,15 | INV.<br>G06F3/01 |
| Y | * figures 1-6C *<br>* paragraph [0001] - paragraph [0006] *<br>* paragraph [0014] - paragraph [0038] *<br>* paragraph [0043] - paragraph [0053] *<br>----- | 14 | G01C23/00<br>G01C19/00<br>G01C21/16<br>G02B27/01 |
| Y | JOFFRION JACQUE M ET AL: "Head Tracking for 3D Audio Using a GPS-Aided MEMS IMU", GNSS 2005 - PROCEEDINGS OF THE 18TH INTERNATIONAL TECHNICAL MEETING OF THE SATELLITE DIVISION OF THE INSTITUTE OF NAVIGATION (ION GNSS 2005), THE INSTITUTE OF NAVIGATION, 8551 RIXLEW LANE SUITE 360 MANASSAS, VA 20109, USA, 16 September 2005 (2005-09-16), pages 2225-2233, XP056009519, | 14 | |
| A | * figures 1-12 *<br>* page 2225, left-hand column, line 20 - page 2233, left-hand column, line 11 *<br>----- | 1-13,15 | |
| X | US 2020/271450 A1 (GORUR SHESHAGIRI PUSHKAR [IN] ET AL) 27 August 2020 (2020-08-27) | 1-6,8-15 | TECHNICAL FIELDS SEARCHED (IPC)<br>G06F |
| A | * figures 1-13 *<br>* paragraph [0057] - paragraph [0129] *<br>* paragraph [0144] - paragraph [0154] *<br>* paragraph [0196] - paragraph [0222] *<br>----- | 7 | G01C<br>G02B<br>A61B |
| A | US 2004/149036 A1 (FOXLIN ERIC [US] ET AL) 5 August 2004 (2004-08-05) * figures 1-8 * * paragraph [0003] - paragraph [0010] * * paragraph [0024] - paragraph [0098] *<br>----- | 1-15 | |
| | -/-- | | |

The present search report has been drawn up for all claims

| Place of search | Date of completion of the search | Examiner |
|---|---|---|
| Munich | 8 November 2021 | Roth, Lucia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 21 17 5848

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | BACHMANN E R ET AL: "Sourceless tracking of human posture using small inertial/magnetie sensors", COMPUTATIONAL INTELLIGENCE IN ROBOTICS AND AUTOMATION, 2003. PROCEEDIN GS. 2003 IEEE INTERNATIONAL SYMPOSIUM ON JULY 16 - 20, 2003, PISCATAWAY, NJ, USA,IEEE, vol. 2, 16 July 2003 (2003-07-16), pages 822-829, XP010651873, ISBN: 978-0-7803-7866-7 * figures 1-7 * * page 823, right-hand column, line 3 - page 826, left-hand column, line 16 * ----- | 1-15 | |

TECHNICAL FIELDS
SEARCHED      (IPC)

The present search report has been drawn up for all claims

| Place of search | Date of completion of the search | Examiner |
|---|---|---|
| Munich | 8 November 2021 | Roth, Lucia |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.............................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 21 17 5848

This annex lists the patent family members relating to the patent documents cited in the above-mentioned European search report.
The members are as contained in the European Patent Office EDP file on
The European Patent Office is in no way liable for these particulars which are merely given for the purpose of information.

08-11-2021

| Patent document cited in search report | | Publication date | Patent family member(s) | | Publication date |
|---|---|---|---|---|---|
| EP 3441720 | A1 | 13-02-2019 | EP 3441720 A1 | | 13-02-2019 |
| | | | US 2019041979 A1 | | 07-02-2019 |
| US 2020271450 | A1 | 27-08-2020 | CN 113474825 A | | 01-10-2021 |
| | | | US 2020271450 A1 | | 27-08-2020 |
| | | | WO 2020176359 A1 | | 03-09-2020 |
| US 2004149036 | A1 | 05-08-2004 | NONE | | |

EPO FORM P0459

For more details about this annex : see Official Journal of the European Patent Office, No. 12/82